# DEMANDE DE BREVET EUROPEEN

(11) **EP 4 186 667 A1**
(43) Date de publication de la demande: **31.05.2023**
(21) Numéro de dépôt: 22210378.0
(22) Date de dépôt: 29.11.2022
(51) Int. Cl.: B28C 1/00, B28C 1/20, B28C 1/22, B28C 3/00, B28C 7/00, B28C 7/02, B28C 7/04, B28C 9/00, C04B 28/00

(54) **CENTRALE A BETON D ARGILE CRUE ET PROCEDE DE COMMANDE**

(30) Priorité: 29.11.2021 FR 2112695
(71) Demandeur: Materrup, 40230 Saint-Geours-de-Maremne (FR)
(72) Inventeur: NEUVILLE, Mathieu, 40230 SAINT-GEOURS-DE-MAREMNE (FR); MERCE, Manuel, 40230 SAINT-GEOURS-DE-MAREMNE (FR)
(74) Mandataire: A.P.I. Conseil

(57) **Abrégé**

L'invention concerne une centrale (1) à béton d'argile crue et son procédé de commande. La centrale (1) à béton d'argile crue comportant : un premier moyen de pesage (21) ; un ou plusieurs second(s) moyen(s) de pesage (22), distinct(s) du premier moyen de pesage ; et un moyen de dosage volumétrique (23) ; ladite centrale (1) à béton d'argile comportant en outre : un malaxeur (50) configuré pour former à partir de la matrice argileuse crue, de la composition d'activation, de la composition d'oxydes métalliques calcinée, des granulats, des adjuvants et de l'eau, une gâchée de béton d'argile crue ; et ladite centrale (1) à béton d'argile étant agencée de façon à être au moins en partie commandée par un ou plusieurs processeurs (60) configurés pour contrôler les transporteurs (111), (121), (131), (711) en fonction de valeurs générées par les un ou plusieurs second(s) moyen(s) de pesage.

## Description

### Domaine technique

L'invention concerne le domaine de la construction et notamment la préparation de béton. L'invention concerne en particulier une centrale à béton d'argile et un procédé de commande d'une centrale à béton d'argile pour la préparation d'un béton d'argile.

### Technique antérieure

Ci-après, nous décrivons l'art antérieur connu à partir duquel l'invention a été développée.

Le ciment, en particulier le ciment Portland, est constitué en montant en température jusqu'à 1450 °C un mélange de matière calcaire, d'argile et de sable dans un four rotatif. Cela nécessite des installations spécifiques qui ne sont pas largement distribuées sur les territoires.

Ainsi, le ciment est fabriqué en un lieu donné puis il est déplacé dans une centrale à béton dans laquelle il sera mélangé avec des agrégats, des adjuvants et de l'eau pour former un béton, tel qu'un béton prêt à l'emploi.

Une centrale à béton est généralement une installation simple dédiée à la fabrication de grande quantité de béton en un temps réduit. Elle peut permettre la fabrication d'une grande diversité de bétons : classiques avec différentes classes de résistances et différentes classes d'exposition, fibrés, haute performance... La centrale à béton stocke généralement les différents éléments constitutifs du béton (eau, ciment, granulats et adjuvants) au sein de cuves/trémies/silos adaptées et fabrique ensuite un béton sur-mesure à la demande de chaque client. Dans sa version la plus courante, une centrale à béton comportera un nombre réduit de silos et notamment un silo à ciment, plusieurs trémies à agrégats (2 à minima avec 1 pour le sable et une pour les agrégats plus gros ; le plus couramment au moins 4 cases à agrégats), un réservoir d'adjuvant, une cuve de dosage, un système de pesage, des pompes, des vis de convoyage, un skip de chargement et un malaxeur.

Etant donné que le béton doit être utilisé dans une plage temporelle donnée à compter de sa confection et considérant le cout associé au déplacement du béton, les centrales à béton sont largement présentes sur les territoires.

Toutefois, ce modèle économique en œuvre depuis plus de 50 ans entraine des émissions très fortes au niveau des cimenteries associées aux montées en températures et des émissions associées à des transports de matière depuis les quelques dizaines de cimenteries présentent sur un territoire jusqu'au nombreuses centrales à béton réparties sur le territoire.

Il faut que le domaine de la construction réduise son empreinte environnementale sans réduire les performances des matériaux de construction générés telles que l'ouvrabilité ou la durabilité.

Des évolutions ont été proposés pour le remplacement du clinker de façon principalement à réduire l'impact carbone de la production de béton mais aussi de façon à réduire la dépendance de la France vis-à-vis des importations. En effet, les importations de clinker ont été multipliées par cinq entre 2013 et 2018 principalement en provenance d'Espagne et de pays d'Afrique du Nord et du Moyen-Orient. Cette pratique peut être associée à des pratiques de délocalisation de la production de clinker. Ainsi, la préparation du ciment à partir de clinker importé peut être réalisée indépendamment sur des stations de broyage situées sur le territoire. En France, il s'agit d'ailleurs d'une tendance qui s'observe depuis quelques années : certains acteurs importent du clinker venu de l'étranger et produisent du ciment pour le marché français dans des stations de broyage généralement situées près des zones portuaires. Cette pratique n'évite malheureusement pas l'émission de CO₂ et la consommation d'énergie associée à la formation de clinker. Face à ces pratiques, la provenance des matières premières devrait être contrôlée et les conditions de formation d'un béton devraient pourvoir être tracées.

Il a par exemple été proposé de remplacer le clinker par des métakaolins et notamment des métakaolins dits flashés. Toutefois, la préparation de ces métakaolins nécessite toujours une montée en température, généralement à plus de 600°C et donc des installations particulières qui ne sont pas largement réparties sur le territoire. Ce type de produit implique une consommation non négligeable d'énergie pour la fabrication du ciment et son transport.

Récemment a été développé un nouveau liant de construction et béton à base d'argile crue. L'utilisation d'argile crue permet de réduire drastiquement la consommation énergétique au niveau de la production du liant hydraulique. Toutefois, il est toujours nécessaire de transporter ce nouveau liant au niveau des centrales à béton.

Ainsi, il existe un besoin pour de nouvelles solutions permettant de réduire encore l'empreinte carbone de la formation de béton.

### Résumé de l'invention

L'invention vise à pallier ces inconvénients. Ce qui suit présente un résumé simplifié d'aspects, de modes de réalisation et d'exemples sélectionnés de la présente invention dans le but de fournir une compréhension de base de l'invention. Toutefois, le résumé de l'invention ne constitue pas un aperçu exhaustif de tous les aspects, modes de réalisation et exemples de l'invention. Le seul but du résumé est de présenter des aspects, des modes de réalisation et des exemples sélectionnés de l'invention sous une forme concise en guise d'introduction à la description plus détaillée des aspects, des modes de réalisation et des exemples de l'invention qui suivent le résumé.

L'invention concerne en particulier une centrale à béton d'argile crue comportant :
- un premier moyen de pesage ;
- un ou plusieurs second(s) moyen(s) de pesage, distinct(s) du premier moyen de pesage ;
- un moyen de dosage volumétrique ;
ladite centrale à béton d'argile comportant en outre :
- Un silo d'argile crue destiné à accueillir une matrice argileuse crue, et couplé aux un ou plusieurs second(s) moyen(s) de pesage par un transporteur d'argile crue ;
- Un silo d'activateur destiné à accueillir une composition d'activation, et couplé aux un ou plusieurs second(s) moyen(s) de pesage par un transporteur d'activateur ;
- Un silo d'oxydes métalliques destiné à accueillir une composition d'oxydes métalliques calcinée, et couplé aux un ou plusieurs second(s) moyen(s) de pesage par un transporteur d'oxydes métalliques ;
- Une ou plusieurs trémies à granulats, couplé(s) au premier moyen de pesage par un transporteur à granulats ;
- Un réservoir d'eau ;
- Un ou plusieurs réservoirs à adjuvants ; et
- Un malaxeur configuré pour former une gâchée de béton d'argile crue, à partir de la matrice argileuse crue, de la composition d'activation, de la composition d'oxydes métalliques calcinée, des granulats, des adjuvants et de l'eau ;
ladite centrale à béton d'argile crue étant agencée de façon à être au moins en partie commandée par un ou plusieurs processeurs, lesdits processeurs étant configurés pour contrôler les transporteurs en fonction de valeurs générées par les un ou plusieurs second(s) moyen(s) de pesage.

La demanderesse a développé une centrale à béton pouvant directement utiliser une argile crue, en particulier une matrice argileuse crue, pour la préparation d'un béton d'argile crue. Classiquement, la fabrication d'un béton nécessite une cimenterie capable de réaliser des montées en température par exemple à plus de 1400°C et une centrale à béton. Avec la présente solution, le transport de matière sur le territoire et l'empreinte environnementale globale sont réduits de manière significative grâce à l'utilisation d'une argile crue qui n'aura pas nécessité un traitement thermique. Un mélange adapté des composants d'un béton d'argile peut être fait directement au niveau d'une centrale à béton d'argile crue. La demanderesse a développé en particulier une centrale à béton comportant une pluralité de silos et plusieurs moyens de pesés chacun adapté à un ou plusieurs des constituants de façon à permettre les dosages précis nécessaires à la confection d'un béton répondant aux exigences du secteur. En outre, comme cela sera détaillé, une centrale à béton selon l'invention peut comporter plusieurs capteurs capables de mesurer une ou plusieurs valeur(s) d'une propriété physicochimique de plusieurs constituants d'une gâchée de béton d'argile crue.

Selon d'autres caractéristiques optionnelles de la centrale à béton d'argile crue, cette dernière peut inclure facultativement une ou plusieurs des caractéristiques suivantes, seules ou en combinaison :
- le premier moyen de pesage présente une précision de mesure de 5 kg ou plus, avec de préférence une capacité d'au moins 1 m³ ; et les uns ou plusieurs second(s) moyen(s) de pesage présentent une précision de mesure de 1 kg ou moins, de préférence de 0,5 kg ou moins, avec de préférence une capacité d'au moins 0,1 m³. L'utilisation de deux ensembles de moyens de pesage aux caractéristiques différentes permet d'obtenir une performance et/ou une stabilité du béton d'argile crue produit à partir d'une installation moins complexe que la combinaison d'une cimenterie et d'une centrale à béton classique.
- le ou lesdits second(s) moyen(s) de pesage sont agencés pour effectuer une mesure de valeurs de pesée de la matrice argileuse crue et/ou de la composition d'oxydes métalliques calcinée et/ou de la composition d'activation. L'utilisation d'un ou plusieurs second(s) moyen(s) de pesage dédiés à la matrice argileuse crue, à la composition d'activation, et à la composition d'oxydes métalliques calcinée permet d'obtenir une gâchée présentant de meilleurs performances. De préférence, il y a un seul second moyen de pesage configuré pour effectuer une mesure de valeurs de pesée de la matrice argileuse crue, de la composition d'oxydes métalliques calcinée et de la composition d'activation.
- le ou les processeurs sont configurés pour commander la centrale à béton de façon à ce que la gâchée de béton d'argile crue comporte au moins 2 % en poids de la composition d'oxydes métalliques calcinée, de façon préférée au moins 2 % en poids d'une composition de laitiers de hauts fourneaux. En particulier, le ou les processeurs pourront être configurés pour commander un ou plusieurs des transporteurs de la centrale à béton, tel que le transporteur d'oxydes métalliques. La présence d'au moins 2% en poids d'une composition d'oxydes métalliques calcinée dans la gâchée permet de produire un béton aux performances élevées tel qu'un béton d'argile crue de type C25/30 ou plus.
- le ou les processeurs sont configurés pour commander la centrale à béton de façon à ce que la gâchée de béton d'argile crue comporte la composition d'oxydes métalliques calcinée et la matrice argileuse crue à un ratio massique en poids sec de la composition d'oxydes métalliques calcinée sur la matrice argileuse crue compris entre 0,2 et 3, de préférence 0,4 et 2,5, de façon plus préférée entre 0,5 et 2. En particulier, le ou les processeurs pourront être configurés pour commander un ou plusieurs des transporteurs de la centrale à béton pour obtenir un tel ratio. Un tel ratio permet de produire un béton aux performances élevées tel qu'un béton d'argile crue de type C25/30 ou plus.
- le ou les processeurs sont configurés pour que la composition d'oxydes métalliques calcinée représente dans la gâchée de béton d'argile crue, de 20 % à 70 % en poids sec du mélange de matrice argileuse crue et de composition d'activation ; de façon préférée, de 30 % à 45 % ; de façon plus préférée, de 55 % à 70 % en poids sec du mélange de matrice argileuse crue et de composition d'activation. En particulier, le ou les processeurs pourront être configurés pour commander un ou plusieurs des transporteurs de la centrale à béton pour obtenir un tel rapport. L'utilisation de deux moyens de pesée permet d'améliorer la justesse des mesures et permet de commander la centrale à béton de façon à ce quelle produise un béton d'argile crue présentant des ratios entre composants de liant permettant de produire un béton aux performances élevées tel qu'un béton d'argile crue de type C25/30 ou plus.
- le ou les processeurs sont configurés pour que la gâchée de béton d'argile crue comporte un agent défloculant représentant au moins 0,5 % en poids sec de la matrice argileuse crue, de préférence au moins 1 % en poids sec de la matrice argileuse crue, de façon plus préférée au moins 2 % en poids sec de la matrice argileuse crue, de façon encore plus préférée au moins 3 % en poids sec de la matrice argileuse crue, et par exemple au moins 4 % en poids sec de la matrice argileuse crue. En particulier, le ou les processeurs pourront être configurés pour commander un ou plusieurs moyens de dosage du défloculant. Cela permet de produire un béton d'argile crue aux performances élevées tel qu'un béton d'argile crue de type C25/30 ou plus.
- elle comporte :
   - un capteur d'humidité configuré pour mesurer une valeur de taux d'humidité de la matrice argileuse crue,
   - un spectromètre à fluorescence X configuré pour mesurer une valeur d'indice de qualité de la matrice argileuse crue et/ou une valeur d'indice d'homogénéité de la matrice argileuse crue, et/ou
   - un granulomètre laser en ligne configuré pour mesurer au moins une valeur de granulométrie de la matrice argileuse crue,
   et le ou les processeurs sont configurés pour :
   - comparer la valeur de taux d'humidité, la valeur d'indice de qualité, la valeur d'indice d'homogénéité et/ou la valeur de granulométrie à une ou plusieurs valeurs de seuil prédéterminé ; et
   - émettre une alerte lorsqu'une valeur mesurée dépasse le seuil prédéterminé correspondant.
   Cela permet un contrôle de la qualité des matières première utilisées sur des indicateurs ayant un impact important sur la qualité du béton produit.
- le capteur d'humidité, le spectromètre à fluorescence X et/ou le granulomètre laser en ligne sont positionnés en amont du silo d'argile crue et de préférence sont intégrés à un conteneur tampon destiné à établir une interface entre des camions bananes et le silo d'argile crue. Cela permet de limiter les risques de contamination des silos avec une matière première non adaptée.
- elle comporte :
   - un capteur d'humidité configuré pour mesurer une valeur de taux d'humidité de la matrice argileuse crue,
   - un spectromètre à fluorescence X configuré pour mesurer une valeur d'indice de qualité de la matrice argileuse crue et/ou une valeur d'indice d'homogénéité de la matrice argileuse crue, et/ou
   - un granulomètre laser en ligne configuré pour mesurer au moins une valeur de granulométrie de la matrice argileuse crue,
   et le ou les processeurs sont configurés pour calculer une quantité à ajouter de matrice argileuse crue, de composition d'activation, de composition d'oxydes métalliques et/ou d'adjuvant en fonction de la valeur de taux d'humidité de la matrice argileuse crue, de la valeur d'indice de qualité de la matrice argileuse crue, de la valeur d'indice d'homogénéité de la matrice argileuse crue, et/ou de l'au moins une valeur de granulométrie de la matrice argileuse crue.
   Cela permet de produire un béton d'argile crue aux performances élevées tel qu'un béton d'argile crue de type C25/30 ou plus.
- elle comporte un spectromètre à fluorescence X configuré pour mesurer des valeurs de fluorescence X de la matrice argileuse crue, le ou les processeurs étant en outre configurés pour commander le transport d'un ou de plusieurs adjuvants au malaxeur en fonction des valeurs de fluorescence X mesurées de la matrice argileuse crue.
- Elle comporte un moyen de mesure d'une valeur de couple de malaxage du malaxeur, le ou les processeurs étant en outre configurés pour commander le transport d'un ou de plusieurs adjuvants au malaxeur en fonction de la valeur de couple de malaxage mesurée. Il peut y avoir des variations en fonction de l'origine de la matrice argileuse crue. Une mesure en continue au niveau du malaxeur permet d'adapter aux conditions de l'instant et génère une plus grande stabilité entre gâchées.
- le ou les processeurs sont configurés pour recevoir une valeur de quantité de granulats présents dans la matrice argileuse crue et le ou les processeurs sont en outre configurés pour commander le transport d'un ou de plusieurs granulats au malaxeur notamment en fonction de la valeur de quantité de granulats présents dans la matrice argileuse crue. Ainsi, le sable et les autres granulats contenus dans les trémies à granulat (par exemple venus de carrières) ne servent que de correctifs.
- Elle comporte un capteur optique capable d'analyser la forme et/ou la couleur des matières premières ainsi qu'un ou plusieurs trieurs commandés par le ou les processeurs et capable d'éliminer des éléments indésirables détectés par le capteur optique.
- Elle comporte en outre un capteur d'humidité configuré pour mesurer une valeur de taux d'humidité de la matrice argileuse crue. En particulier, le capteur d'humidité est positionné au niveau du transporteur d'argile crue, au niveau du silo d'argile crue ou au niveau du second moyen de pesage. En particulier, elle comporte en outre un capteur d'humidité agencé pour mesurer une valeur de taux d'humidité de la matrice argileuse crue pesée. Le capteur d'humidité peut alors être positionné au niveau du transporteur d'argile crue ou au niveau du second moyen de pesage. Cela permet une plus grande stabilité entre gâchées.
- Elle comporte en outre un capteur d'humidité configuré pour mesurer une valeur de taux d'humidité de la matrice argileuse crue et un capteur d'humidité configuré pour mesurer une valeur de taux d'humidité de granulat.
- Elle comporte en outre un spectromètre configuré pour mesurer une valeur de paramètre physicochimique de la matrice argileuse crue, et au moins un autre spectromètre choisi parmi un spectromètre configuré pour mesurer une valeur de paramètre physicochimique de la composition d'activation, un spectromètre configuré pour mesurer une valeur de paramètre physicochimique de la composition d'oxydes métalliques calcinée et/ou un spectromètre configuré pour mesurer une valeur de paramètre physicochimique de granulat. La mesure d'une valeur d'une propriété physicochimique sur un composant d'une gâchée autre que la matrice argileuse crue permet une plus grande stabilité entre gâchées.
- Elle comporte en outre un capteur d'humidité configuré pour mesurer une valeur de taux d'humidité de la matrice argileuse crue, et au moins un autre capteur d'humidité choisi parmi un capteur d'humidité configuré pour mesurer une valeur de taux d'humidité de la composition d'activation, un capteur d'humidité configuré pour mesurer une valeur de taux d'humidité de la composition d'oxydes métalliques calcinée et/ou un capteur d'humidité configuré pour mesurer une valeur de taux d'humidité de granulat. La mesure d'une valeur d'une propriété physicochimique sur un composant d'une gâchée autre que la matrice argileuse crue et en particulier une mesure de valeur d'humidité permet une plus grande stabilité entre gâchées.

Selon un autre objet, l'invention porte sur un procédé de contrôle d'une centrale à béton d'argile crue, par exemple d'une centrale à béton d'argile crue selon la présente invention, ledit procédé comportant les étapes suivantes :
- Transport de granulats depuis les trémies à granulats jusqu'au premier moyen de pesage, par un transporteur à granulats ; et arrêt du transport commandé par l'un ou les processeurs lorsqu'une valeur mesurée de poids de granulat atteint un seuil prédéterminé ; et transfert des granulats depuis un premier moyen de pesage jusqu'au malaxeur ;
- Transport d'une matrice argileuse crue depuis le silo d'argile crue jusqu'à un second moyen de pesage, par le transporteur d'argile crue ; et arrêt du transport commandé par l'un ou les processeurs lorsqu'une valeur mesurée de poids de matrice argileuse crue atteint un seuil prédéterminé ; et transfert de la matrice argileuse crue depuis le second moyen de pesage jusqu'au malaxeur ;
- Transport d'une composition d'activation depuis le silo d'activateur jusqu'au second moyen de pesage, par le transporteur d'activateur ; et arrêt du transport commandé par l'un ou les processeurs lorsqu'une valeur mesurée de poids de composition d'activation atteint un seuil prédéterminé ; et transfert de la composition d'activation depuis le second moyen de pesage jusqu'au malaxeur ;
- Transport d'une composition d'oxydes métalliques calcinée depuis le silo d'oxydes métalliques jusqu'au second moyen de pesage, par un transporteur d'activateur ; et arrêt du transport commandé par l'un ou les processeurs lorsqu'une valeur mesurée de poids de composition d'oxydes métalliques calcinée atteint un seuil prédéterminé ; et transfert de la composition d'oxydes métalliques calcinée depuis le second moyen de pesage jusqu'au malaxeur ;
- Transport d'une quantité prédéterminée d'un ou plusieurs adjuvants depuis un des réservoirs jusqu'au malaxeur, par un moyen de dosage volumétrique ; et
- Malaxage du mélange contenu dans le malaxeur et ajout d'eau de façon à produire une gâchée de béton d'argile crue.

Le malaxage pourra intervenir une fois que tous les composants du béton d'argile crue auront été intégré au malaxeur. Toutefois, le malaxage pourra être initié avant comme par exemple pour réaliser un mélange à sec des granulats sans liant.

En outre, le seuil prédéterminé pourra être chargé depuis un référentiel, obtenu via une interface homme machine ou bien pourra être calculé par le ou les processeurs en fonction d'une ou de plusieurs valeurs mesurées à partir d'une ou de plusieurs matières premières, de préférence à partir d'une valeur de caractéristique de la matrice argileuse crue, de la composition d'activation ou de la composition d'oxydes métalliques calcinées. Ces valeurs, par exemple des valeurs de propriétés physicochimiques, en particulier une valeur de taux d'humidité de la matrice argileuse crue, une valeur d'indice de qualité de la matrice argileuse crue, une valeur d'indice d'homogénéité de la matrice argileuse crue, et/ou au moins une valeur de granulométrie de la matrice argileuse crue, pourront avoir été mesurées préalablement (e.g. au niveau du silo ou avant la livraison à la centrale) ou lors du transport des matières vers le malaxeur.

Selon d'autres caractéristiques optionnelles du procédé, il peut inclure facultativement une ou plusieurs des caractéristiques suivantes, seules ou en combinaison :
- au moins une partie de la matrice argileuse crue présente une D50 comprise entre 10 µm et 500 µm. Par exemple, la matrice argileuse crue pourra présenter une D50 comprise entre 10 µm et 500 µm, de préférence entre 15 µm et 200 µm, de façon plus préférée comprise entre 20 µm et 100 µm ou de façon encore plus préférée comprise entre 20 µm et 50 µm. La présence d'une argile broyée de façon à atteindre de tels diamètres peut permettre d'améliorer la performance du béton produit selon l'invention. L'utilisation d'une matrice argileuse crue broyée et à granulométrie contrôlée est très importante en particulier lors de la préparation de béton prêt à l'emploi sur une centrale à béton.

Selon un autre objet, l'invention porte sur un programme d'ordinateur comprenant des instructions de code de programme pour l'exécution des étapes du procédé selon l'invention lorsque ledit programme est exécuté sur un ordinateur.

### Brève description des dessins

D'autres caractéristiques et avantages de l'invention seront mieux compris à la lecture de la description qui va suivre et en référence aux dessins annexés, donnés à titre illustratif et nullement limitatif.
La figure 1 représente une illustration schématique d'une centrale à béton d'argile crue selon un mode de réalisation de la présente invention.
La figure 2 représente une illustration schématique d'une partie d'une centrale à béton d'argile crue selon un mode de réalisation de la présente invention.
La figure 3 représente une illustration schématique d'un procédé de commande d'une centrale à béton d'argile crue selon un mode de réalisation de la présente invention.

Les figures ne respectent pas nécessairement les échelles, notamment en épaisseur, et ce à des fins d'illustration.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagramme peut représenter un système, un dispositif, un module ou un code, qui comprend une ou plusieurs instructions exécutables pour mettre en œuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en œuvre par des systèmes matériels spéciaux qui exécutent les fonctions ou actes spécifiés ou effectuer des combinaisons de matériel spécial et d'instructions informatiques.

### Description des modes de réalisation

Ci-après, nous décrivons un résumé de l'invention et le vocabulaire associé, avant de présenter les inconvénients de l'art antérieur, puis enfin de montrer plus en détail comment l'invention y remédie.

Dans la suite de la description, l'expression « béton d'argile crue » peut correspondre à un mélange de granulats, comportant éventuellement du sable, avec un liant de construction à base d'une matrice argileuse crue et de l'eau, ayant fait prise. Ainsi, une gâchée de béton peut correspondre au sens de l'invention à mélange frais de granulats (d'origine minérale et/ou végétale), dont éventuellement du sable, de liant de construction à base d'argile crue et d'eau. Ce mélange frais correspondant un mélange ayant été produit en un seul cycle par un malaxeur discontinu ou déversé pendant une minute par un malaxeur continu.

L'expression « matrice argileuse », au sens de l'invention peut correspondre à un ou plusieurs matériaux rocheux à base de silicates hydratés ou d'aluminosilicates de structure lamellaire, ladite matrice argileuse étant composée de particules fines provenant en général de l'altération de silicates à charpente tridimensionnelle, tels que les feldspaths. Une matrice argileuse peut ainsi comporter un mélange de tels matériaux rocheux pouvant par exemple consister en de la kaolinite, de l'illite, de la smectite, de la bentonite, de la chlorite, de la vermiculite, ou leurs mélanges. En outre, une matrice argileuse peut comporter des limons.

Au sens de l'invention, l'expression « matrice argileuse crue », pourra correspondre à une matrice argileuse n'ayant pas subi d'étape de calcination. En particulier, c'est-à-dire qu'elle n'a fait l'objet d'aucun traitement thermique préalable. Par exemple, cela correspond à une matrice argileuse n'ayant pas subit une montée en température supérieure à 300°C, de préférence supérieure à 200°C et plus préférentiellement une température supérieure à 150°C. En effet, la matrice argileuse crue peut subir une étape de séchage par chauffage nécessitant une montée en température généralement sensiblement égale ou inférieure à 150°C mais pas d'étape de calcination. Une matrice argileuse crue peut de préférence comporter un mélange de matériaux rocheux pouvant par exemple comporter de la kaolinite, de l'illite, de la smectite, micas tels que la muscovite, de la bentonite, de la chlorite, de la vermiculite, ou leurs mélanges, ainsi que des limons.

Au sens de l'invention, un « agent défloculant », « défloculant » ou « agent de défloculation », peut correspondre à un composé capable de dissocier des agrégats et des colloïdes notamment en suspension aqueuse. Des agents défloculant ont par exemple été utilisés dans un contexte de forage ou d'extraction pétrolière pour rendre l'argile plus fluide et faciliter l'extraction ou le forage.

L'expression « composition d'oxydes métalliques » peut se référer au sens de l'invention à une composition comportant des oxydes métalliques tels que des aluminates. En particulier, la composition d'oxydes métalliques comporte plus de 25 % en poids d'oxydes métalliques, de préférence plus de 30 % en poids d'oxydes métalliques, de façon plus préférée plus de 40 % en poids d'oxydes métalliques et de façon encore plus préférée plus de 45 % en poids d'oxydes métalliques. Par exemple, la composition d'oxydes métalliques comporte plus de 2 % en poids d'aluminate, de préférence plus de 5 % en poids d'aluminate, de façon plus préférée plus de 7% en poids d'aluminate et de façon encore plus préférée plus de 10 % en poids d'aluminate. En outre, les oxydes métalliques peuvent correspondre à, ou comporter, des oxydes d'alcalinoterreux. Par exemple, la composition d'oxydes métalliques peut comporter plus de 10 % en poids d'oxyde de calcium, de préférence plus 20 % en poids d'oxyde de calcium, de façon plus préférée plus 25 % en poids d'oxyde de calcium et de façon encore plus préférée plus de 30 % en poids sec d'oxyde de calcium. La composition d'oxydes métalliques peut comporter des espèces chimiques n'étant pas des oxydes métalliques. Par exemple, la composition d'oxydes métalliques peut comporter des oxydes de métalloïdes avec par exemple plus de 10 % en poids d'oxyde de métalloïdes, de préférence plus 20 % en poids d'oxyde de métalloïdes, de façon plus préférée plus 25 % en poids d'oxyde de métalloïdes et de façon encore plus préférée plus de 30 % en poids d'oxyde de métalloïdes. Ces concentrations massiques peuvent être aisément mesurées par l'homme du métier utilisant les techniques classiques de dosage des oxydes métalliques ou des oxydes de métalloïdes. En particulier, l'expression « composition d'oxydes métalliques » se réfère à une composition comportant plus de 50%, de préférence plus de 70%, de façon plus préférée plus de 80% et de façon encore plus préférée plus de 90% d'oxydes métalliques et/ou d'oxydes de métalloïdes, dont des aluminates. De préférence, une composition d'oxydes métalliques correspondra à un laitier issu de la métallurgie, tel qu'un laitier de hauts fourneaux ou encore à des cendres volantes. Comme cela sera détaillé par la suite, la « composition d'oxydes métalliques » est de préférence une composition d'oxydes métalliques calcinée. C'est-à-dire qu'elle a subi une étape à haute température. Cette étape à haute température peut être naturelle ou artificielle, dans ce cas, il s'agit d'un traitement à haute température. L'étape à haute température peut par exemple correspondre à un traitement à une température supérieure ou égale à 500°C, de préférence supérieure ou égale à 750°C et de façon plus préférée supérieure ou égale à 900°C ; et de façon encore plus préférée supérieure à 1000°C.

Le terme « liant » ou « liant de construction » au sens de l'invention peut être compris comme une formulation permettant d'assurer l'agglomération de matériaux entre eux, notamment lors de la prise, puis du durcissement d'un matériau de construction. Ainsi, il permet en particulier d'assurer l'agglomération du sable et autres granulats avec les constituants du liant. Le liant selon l'invention est en particulier un liant hydraulique, c'est-à-dire que le durcissement se fait au contact de l'eau.

L'expression « ciment Portland » correspond à un liant hydraulique composé principalement de silicates de calcium hydraulique dont la prise et le durcissement est rendue possible par une réaction chimique avec de l'eau. Le ciment Portland contient généralement au moins 95% de clinker et au maximum 5% de constituants secondaires tels que des alcalis (Na₂O, K₂O), de la magnésie (MgO), du gypse (CaSO₄ · 2 H₂O) ou encore diverses traces de métaux.

Le terme « sensiblement égale » au sens de l'invention correspond à une valeur variant de moins de 20 % par rapport à la valeur comparée, de préférence de moins de 10 %, de façon encore plus préférée de moins de 5 %.

L'expression « terre argileuse excavée » correspond au sens de l'invention à une terre argileuse obtenue suite à une étape où le sol a été creusé par exemple au cours d'opérations de régalements et/ou de terrassements, en vue de construire, bâtir ou remblayer. En particulier, au sens de l'invention, la terre argileuse excavée peut être ou non déplacée hors du site de production. De façon préférée et selon un avantage de l'invention, la terre excavée est utilisée sur le site de production ou à une distance inférieure à 200 km, de préférence inférieure à 50 km. En outre, avantageusement, la terre argileuse excavée dans le cadre de l'invention est une terre argileuse excavée crue, c'est-à-dire qu'elle n'a pas subi d'étape de calcination. En particulier, c'est-à-dire qu'elle n'a fait l'objet d'aucun traitement thermique préalable. Par exemple, cela correspond à une terre argileuse n'ayant pas subit une montée en température supérieure à 300°C, de préférence supérieure à 200°C et plus préférentiellement une température supérieure à 150°C. En effet, la terre argileuse crue peut subir une étape de séchage nécessitant une montée en température généralement sensiblement égale à 150°C mais pas d'étape de calcination. Une étape de calcination pourra par exemple correspondre à un traitement thermique à plus de 600°C pendant plusieurs secondes. L'argile telle qu'utilisée conventionnellement présente un profil granulométrique relativement constant avec des tailles inférieures à 2 µm. Une terre argileuse excavée peut présenter différents profils granulométriques. Dans le cadre de l'invention, une terre argileuse excavée pourra comporter des particules de taille supérieure à 2 µm, de préférence supérieure à 20 µm, de préférence supérieure à 50 µm et par exemple supérieure à 75 µm telle que déterminée selon la norme ASTM D422-63. De préférence, la terre argileuse excavée ne comporte pas de granulat de taille supérieure à 2 cm telle que déterminée selon la norme NF EN 933-1, de préférence pas de granulats de taille supérieure à 0,5 cm.

Le terme « clinker » se rapporte à un constituant du ciment et provient de la cuisson d'un mélange composé de sensiblement 80 % de calcaire et 20 % d'aluminosilicates (tels que des argiles). Cette cuisson, la clinkérisation, se fait généralement à une température de plus de 1200°C, particulièrement énergivore et générant de fortes émissions de gaz à effet de serre. Le clinker est généralement moulu puis additivé avec des laitiers de hauts-fourneaux afin de produire du ciment.

Le terme « D50 » correspond au diamètre médian pour lequel 50% (en volume ou en masse, de préférence en volume) des grains, particules, granulats ou sédiments ont une taille inférieure à un diamètre donné. A titre d'exemple, si D50 = 5,8 mm, alors 50 % des particules de l'échantillon (en volume ou en masse, de préférence en volume) sont supérieures à 5,8 mm. D50 est généralement utilisé pour représenter la taille des particules d'un groupe de particules.

On entend par « traiter », « calculer », « déterminer », « afficher », « transformer », « extraire », « comparer » ou plus largement « opération exécutable », au sens de l'invention, une action effectuée par un dispositif ou un processeur sauf si le contexte indique autrement. À cet égard, les opérations se rapportent à des actions et/ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « application », « logiciel », « code de programme », et « code exécutable » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou toute autre séquence d'instructions conçues pour l'exécution sur un système informatique.

On entend par « processeur », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « dispositif informatique », tout dispositif comprenant une unité de traitement ou un processeur, par exemple sous la forme d'un microcontrôleur coopérant avec une mémoire de données, éventuellement une mémoire programme, lesdites mémoires pouvant être dissociées. L'unité de traitement coopère avec lesdites mémoires au moyen d'un bus de communication interne.

On entend par « couplé », au sens de l'invention, connecté, directement ou indirectement avec un ou plusieurs éléments intermédiaires. Deux éléments peuvent être couplés mécaniquement, électriquement ou liés par un canal de communication.

Les solutions existantes pour la préparation d'un béton nécessitent, en cimenterie, des montées à de très haute température (e.g. > 600°C ou > 1400°C) pour la préparation d'un ciment (ou liant). Elles nécessitent aussi le transport de ce liant depuis les cimenteries jusqu'aux centrales à béton puis la préparation du béton en centrale à béton. De telles manipulations ont un impact important sur l'empreinte écologique du béton produit. Toutefois, jusqu'à présent, elles ont été présentées comme essentielles considérant la technicité et la précision nécessaire à la fabrication de liant hydraulique performant.

Face à ce constat, la demanderesse a développé une nouvelle solution, pour répondre à ces problématiques, basée sur la préparation d'un béton d'argile crue. Un tel béton d'argile crue, si certaines précautions sont prises au niveau de la centrale à béton ou lors du procédé de commande de la centrale à béton, permet d'éviter des montées en températures et permet également de réduire les émissions associées au transfert de matières entre sites. Comme cela sera détaillé par la suite, la solution développée repose sur l'utilisation d'une argile crue, sur un assemblage réalisé directement au niveau de la centrale à béton des constituants du liant hydraulique et sur l'utilisation de plusieurs moyens de pesé chacun adapté à une partie des matières premières combinées.

En outre, comme cela sera détaillé par la suite, les performances du béton produit (e.g. son ouvrabilité) peuvent être améliorées par l'utilisation d'un ou plusieurs capteurs permettant de caractériser l'argile crue afin de l'assembler dans des proportions adéquates avec d'autres composants choisis du liant hydraulique formé sur site d'une part et de mieux tracer les lots de bétons générés d'autre part.

Ainsi, selon **un premier aspect,** l'invention porte sur une **centrale 1 à béton d'argile crue** 3.

Une centrale à béton d'argile selon la présente invention sera de préférence au moins en partie automatisée. En effet, à partir de valeurs de pesée mesurées notamment par les seconds moyens de pesage, les processeurs pourront stopper des transporteurs et initier un transfert de matière vers un malaxeur.

Une centrale 1 à argile crue selon la présente invention pourra être une centrale stationnaire ou une centrale mobile.

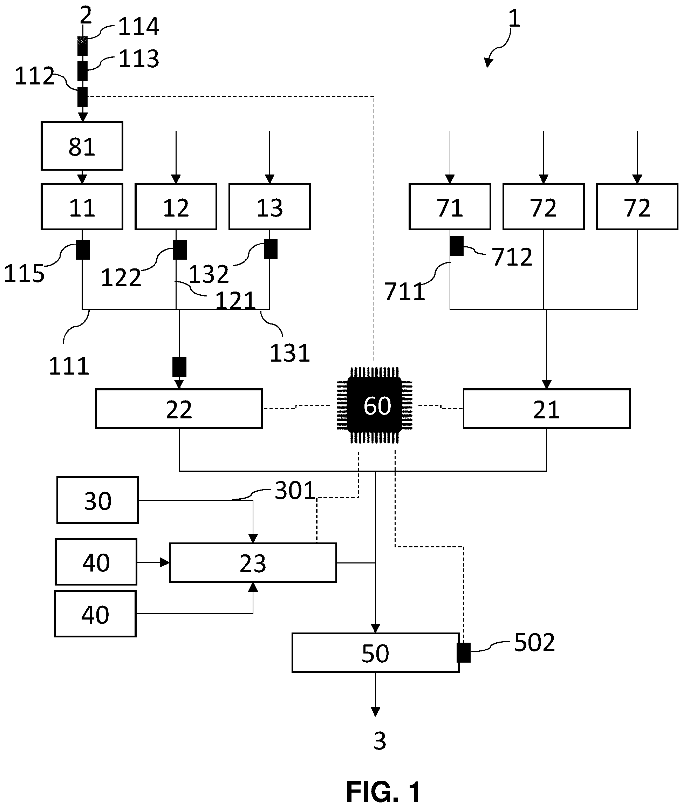

Comme illustrée à **la** **figure 1****,** une centrale 1 à béton d'argile crue 3 selon la présente invention comporte un premier moyen de pesage 21, un ou plusieurs second(s) moyen(s) de pesage 22, distinct(s) du premier moyen de pesage ; et peuvent comporter un moyen de dosage volumétrique 23.

En outre, une centrale 1 à béton d'argile pourra comporter plusieurs silos destinés à accueillir les matières premières nécessaires à la confection du béton d'argile crue. En particulier, une centrale 1 à béton d'argile crue comporte un silo d'argile crue 11 destiné à accueillir une matrice argileuse crue 2, un silo d'activateur 12 destiné à accueillir une composition d'activation, et un silo d'oxydes métalliques 13 destiné à accueillir une composition d'oxydes métalliques calcinée.

Classiquement, une centrale 1 à béton d'argile crue selon la présente invention pourra comporter une ou plusieurs trémies à granulats 71, 72, un réservoir d'eau 30, un ou plusieurs réservoirs à adjuvants 40 et un malaxeur 50.

En outre, une centrale 1 à béton d'argile crue sera avantageusement agencée de façon à être au moins en partie commandée par un ou plusieurs processeurs 60. Ces processeurs 60 sont configurés pour contrôler au moins une partie des transporteurs 111, 121, 131, 711 de la centrale à béton en fonction de valeurs générées par les uns ou plusieurs second(s) moyen(s) de pesage.

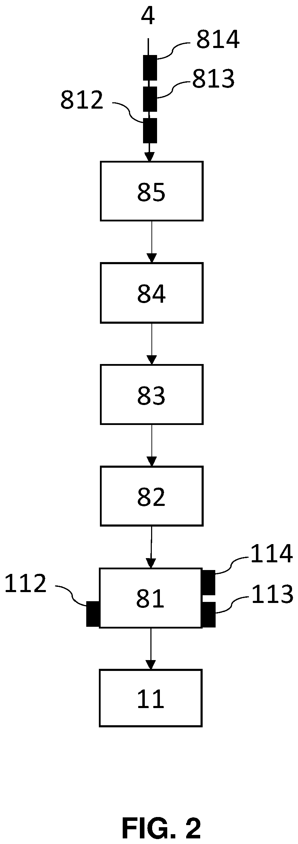

Avantageusement, comme cela est présenté à la **figure 2****,** une centrale 1 à béton d'argile selon la présente invention pourra comporter des éléments de préparation de l'argile crue ou de la matrice argileuse crue. Ces éléments de préparation pourront notamment comporter un démotteur 85, un sécheur 84, un crible 83, un broyeur 82 et/ou un conteneur tampon 81. Dans de telles conditions, l'invention présente en outre l'avantage de concentrer les opérations sur le site de préparation du béton d'argile crue, au plus proche de sa future utilisation.

### Eléments de préparation de l'argile crue 2

Dans la suite de la présente description, la solution développée par la demanderesse sera principalement basée sur l'utilisation d'une argile crue préparée qui aura subi un ou plusieurs traitements permettant d'améliorer sa réactivité. Toutefois, la solution développée par la demanderesse peut mettre en œuvre l'utilisation d'une terre argileuse excavée 4. En effet, dans certains cas, la matrice argileuse crue sera apportée à la centrale à béton d'argile crue sous la forme de terre argileuse excavée 4. La terre argileuse excavée comporte alors généralement du limon mais aussi des sables et des granulats.

Comme illustré à la figure 2, une terre argileuse excavée 4 pourra être intégrée à l'entrée de la centrale à béton 1 d'argile crue selon la présente invention. La terre argileuse excavée 4 pourra être analysée avant de subir les traitements adaptés. Par exemple, la centrale à béton d'argile crue pourra comporter un capteur d'humidité 812, un spectromètre à fluorescence X 813 et/ou un granulomètre laser en ligne 814.

Une terre argileuse excavée 4 pourra alors être traitée dans un démotteur 85 de façon à casser les mottes.

La terre argileuse 4 pourra également être séchée dans un sécheur 84. Le sécheur pourra notamment permettre une réduction du taux d'humidité de la terre argileuse sans réalisée de montée en température de la terre argileuse excavée supérieure à 500°C. Le sécheur 84 sera par exemple un sécheur rotatif.

La terre argileuse séchée pourra avantageusement subir une étape de criblage au sein d'un crible 83. Le crible 83 sera de préférence configuré pour éliminer les granulats présentant un diamètre supérieur ou égal à 2 cm. Le crible 83 sera par exemple un crible rotatif.

La terre argileuse 4 pourra avantageusement être broyée dans un broyeur 82. Le broyeur 82 pourra par exemple être un broyeur à marteau, un broyeur à boulet ou encore un broyeur à barre.

En outre, une centrale à béton 1 d'argile selon la présente invention peut comporter un dispositif de capture magnétique permettant d'isoler des éléments métalliques présents dans la terre argileuse. Le dispositif de capture magnétique pourra être un dispositif de capture électromagnétique de type aimants ou électroaimants.

En outre, la centrale à béton 1 d'argile crue selon la présente invention pourra comporter des moyens de caractérisation de la matrice argileuse crue préparée. Ces moyens permettront de préférence de mesurer :
- la quantité massique de sable dans la matrice argileuse crue,
- la quantité massique de granulat dans la matrice argileuse crue ; et
- la quantité d'argile crue dans la matrice argileuse crue.

Ces moyens de mesure peuvent être des moyens de mesure en continue ou ponctuels.

Avantageusement une ou plusieurs de ces valeurs seront traitées par le ou les processeurs 60 pour la génération des instructions de commandes de la centrale à béton 1 d'argile crue. Ainsi, par exemple, les transporteurs à granulats 711 seront contrôlés de façon à ce que le sable et les granulats contenus dans les trémies à granulat (par exemple venus de carrières) ne servent que de correctif. En effet, les quantités de sable et de granulat déjà présents dans la matrice argileuse crue prétraitée pourront être pris en compte.

En outre, une centrale à béton 1 d'argile crue selon la présente invention peut comporter un conteneur tampon 81. Un tel conteneur est de préférence positionné en amont du silo d'argile crue 11 mais la centrale peut comporter un tel conteneur tampon 81 pour le silo d'activateur 12 et/ou pour le silo d'oxydes métalliques 13.

Un conteneur tampon 81 est de préférence agencé de façon à pouvoir vérifier la conformité de la matière première en amont du transfert de ladite matière première dans un silo.

Ainsi, la présente invention permet de limiter très fortement les émissions de CO₂ puisque sont réduits les transports et les opérations de transformation de la matière. En outre, la fabrication d'un béton d'argile crue lorsque de la terre argileuse excavée est traitée selon l'invention nécessite moins de granulats et de sable venant de carrière. La présente invention permet alors de réduire aussi l'énergie globale la terre argileuse pourra être utilisée sans modification majeure de son humidité. Une telle solution à base d'argile crue contenu dans une terre argileuse peut être particulièrement pertinente pour des bétons de remplissage de classe C25/30 maximum ; ou même C20/25 voire C16/20.

### Les silos de la centrale à béton 1 d'argile crue

Généralement, les silos sur les centrales à béton contiennent des matières pulvérulentes tandis que les granulats sont dans des trémies verticales ou horizontales.

Dans le cadre de la présente invention, une centrale 1 à béton d'argile crue comportera au moins trois silos : un silo d'argile crue, un silo d'activateur, et un silo d'oxydes métalliques.

Toutefois, avantageusement, une centrale 1 à béton d'argile crue pourra comporter plusieurs silos d'argile crue, d'activateur, et d'oxydes métalliques. En particulier, outre un silo d'argile crue, elle pourra comporter : un silo à ciment portland, un silo de laitiers de hauts fourneaux, un silo de cendres volantes, un silo de métakaolin, un silo de métaillite et un silo de filler calcaire.

Le transport des matières stockées dans les silos se fait de préférence par des dispositifs de transports adaptés aux matières pulvérulentes tels que des vis sans fin.

### Le silo d'argile crue 11

Un silo d'argileuse crue 11 sera de préférence destiné à accueillir une matrice argileuse crue 2. Ainsi, dans le cadre de la présente invention une centrale à béton d'argile crue selon la présente invention comporte un silo d'argile crue 11 contenant une matrice argileuse crue 2.

En particulier, le silo d'argile crue 11 est un silo adapté aux matières pulvérulentes. Comme cela a été mentionné, une matrice argileuse crue 2 pourra avoir été préparée au niveau de la centrale à béton d'argile crue selon la présente invention à partir d'une terre argileuse telle qu'une terre argileuse excavée. Alternativement, une matrice argileuse crue 2 peut être livrée après sa préparation sur un autre site.

La matrice argileuse crue peut par exemple comporter au moins une espèce minérale sélectionnée parmi : Illite, Kaolinite, Smectite, Bentonite, Vermiculite, Chlorite, Muscovite, Halloysite, Sépiolite, et Attapulgite. La famille des smectites comporte notamment les montmorillonites et la bentonite.

De façon préférée, la matrice argileuse crue comporte au moins deux types d'argiles sélectionnés parmi : Illite, Kaolinite, Smectite, Bentonite, Vermiculite, Chlorite, Muscovite, Halloysite, Sépiolite, et Attapulgite. Cela inclut les argiles dites interstratifiées qui sont des combinaisons complexes de plusieurs argiles. Encore plus préférée, la matrice argileuse crue comporte au moins une espèce minérale sélectionnée parmi : Kaolinite, Illite, Smectite, Bentonite, Chlorite et Vermiculite.

Le tableau 1 ci-dessous présente les caractéristiques chimiques de ces espèces minérales.

**[Tableau 1]**

| | **Type d'argile** | **Composition** |
|---|---|---|
| Matrice Argileuse Crue | Illite | (K,H₃O)(Al,Mg,Fe)₂(Si,Al)₄O₁₀[(OH)₂,(H₂O)] |
| | Smectite | (Na,Ca)_{0,3}(Al,Mg)₂Si₄O₁₀(OH)₂, n H₂O |
| | Kaolinite | Al₂Si₂O₅(OH)₄ |
| | Bentonite | (Na,Ca)_{0,3}(Al,Mg)₂Si₄O₁₀(OH)₂ |
| | Vermiculite | (Mg,Ca)_{0,7}(Mg,Fe,Al)₆(Al,Si)₈O₂₂(OH)₄, n H₂O |
| | Chlorite | (Fe,Mg,Al)₆(Si,Al)₄O₁₀(OH)₈ |
| | Muscovite | KAl₂(AlSi₃O₁₀) (OH,F)₂ |
| | Halloysite | Al₂Si₂O₅(OH)₄ |
| | Sépiolite | Mg₄Si₆O₁₅(OH)₂, n H₂O |
| | Attapulgite | (Mg,Al,Fe³⁺)₅[Si₈O₂₀](OH)₂ (OH2)₄ n H₂O |

Le type d'argile pourra être déterminé par les méthodes connues de la personne du métier. En particulier, il sera possible d'utiliser de la diffractométrie des rayons X. Par exemple les conditions suivantes pourront être utilisées :
- Appareillage : Diffractomètre, par exemple un BRUKER D8 ADVANCE (Géométrie Bragg-Brentano) ; par exemple présentant les réglages suivants : Tube au Cuivre (λ Kα1 ≈ 1.54 Å) Puissance du générateur : 40 kV, 40 mA ; Optiques primaires : fente fixe 0.16° ; fente de Soller 2.5° ; Optique secondaire : fente de Soller 2.5° ; Détecteur LynXeye XE-T
- Paramètres d'acquisition : Balayage de 4 à 90°2θ ; Vitesse de balayage de 0,03°2θ/seconde, Temps de comptage : 480 secondes par pas ; Echantillon tournant.

La matrice argileuse crue pourra, de façon préférée, correspondre au moins en partie à une terre argileuse excavée, de préférence une terre argileuse excavée non calcinée, telle qu'une terre argileuse excavée crue traitée. En particulier, dans ce cas, la matrice argileuse pourra comporter des particules de taille supérieure à 2 µm, de préférence supérieure à 20 µm, de préférence supérieure à 50 µm et par exemple supérieure à 75 µm telle que déterminée selon la norme ASTM D422-63. De préférence, la matrice argileuse crue ne comporte pas de granulat de taille supérieure à 2 cm telle que déterminée selon la norme NF EN 933-1.

Comme cela a été décrit, la terre argileuse excavée pourra avantageusement avoir été prétraitée, ledit prétraitement étant sélectionné parmi : broyage, triage, tamisage et/ou séchage de la terre argileuse excavée. Le prétraitement peut par exemple comporter un fractionnement. Un fractionnement sera avantageusement configuré de façon à ce que les matières impropres à l'utilisation en béton d'argile crue soient extraites. Elles pourront être dirigées vers d'autres filières de valorisation (par exemple une filière de Brique en Terre Crue).

Avantageusement, la matrice argileuse crue pourra comporter au moins 2 % en poids de particules de limon, de préférence au moins 4 % en poids, de façon plus préférée au moins 6 % en poids. Les particules de limon sont en particulier des particules présentant un diamètre compris entre 2 µm et 50 µm.

Avantageusement, au moins une partie de la matrice argileuse crue pourra correspondre à de l'argile crue broyée. De façon préférée, une partie de la matrice argileuse crue pourra présenter une D50 inférieure ou égale à 500 µm, de préférence inférieure ou égale à 250 µm, de façon plus préférée inférieure ou égale à 100 µm ou de façon encore plus préférée inférieure ou égale à 50 µm.

En outre, au moins une partie de la matrice argileuse crue pourra présenter une D50 supérieure ou égale à 0,1 µm, de préférence supérieure ou égale à 1 µm, de façon plus préférée supérieure ou égale à 10 µm ou de façon encore plus préférée supérieure ou égale à 20 µm, de manière plus préférée, supérieure à 40 µm. Cela permet de limiter les contraintes sur les outils productif industriels dédiés au broyage.

De façon plus préférée, au moins une partie de la matrice argileuse crue pourra présenter une D50 comprise entre 10 µm et 500 µm, de préférence comprise entre 15 µm et 200 µm, de façon plus préférée comprise entre 20 µm et 100 µm ou de façon encore plus préférée comprise entre 20 µm et 50 µm. La présence d'une argile broyée de façon à atteindre de tels diamètres peut permettre d'améliorer la performance du béton produit selon l'invention.

L'utilisation d'une matrice argileuse crue broyée et à granulométrie contrôlée est très importante en particulier lors de la préparation de béton prêt à l'emploi sur une centrale à béton.

Comme illustré à la figure 1, un silo d'argile crue 11 pourra être couplé aux un ou plusieurs second(s) moyen(s) de pesage par un transporteur d'argile crue 111.

De préférence, le transporteur d'argile crue 111 est un transporteur adapté au transport de matière pulvérulente ; de préférence, le transporteur d'argile crue 111 est sélectionné parmi : une vis sans fin, une bande de convoyage ou tout moyen équivalent.

La centrale à béton d'argile peut comporter, en amont du silo d'argile crue 11, un capteur d'humidité 112 configuré pour mesurer une valeur de taux d'humidité de la matrice argileuse crue, de préférence de la matrice argileuse crue destinée à être ajoutée au silo d'argile crue 11. Un capteur d'humidité pourra par exemple prendre la forme d'une ou de plusieurs sondes micro-ondes.

La centrale à béton d'argile crue peut comporter, en amont du silo d'argile crue 11, un spectromètre à fluorescence X configuré pour mesurer la qualité et l'homogénéité de la matrice argileuse crue, de préférence de la matrice argileuse crue destinée à être ajoutée au silo d'argile crue 11.

La centrale à béton d'argile peut comporter, en amont du silo d'argile crue 11, un granulomètre laser en ligne 114 configuré pour mesurer des valeurs de granulométrie de la matrice argileuse crue, de préférence de la matrice argileuse crue destinée à être ajoutée au silo d'argile crue 11.

Les capteurs positionnés en amont du silo d'argile crue 11 sont de préférence intégrés à un conteneur tampon 81 destiné à établir une interface entre des camions bananes et le silo à argile crue.

Les valeurs générées par les capteurs positionnés en amont du silo d'argile crue 11 peuvent être utilisées pour générer une empreinte numérique de la matrice argileuse crue 2 livrées.

La centrale à béton d'argile peut comporter en outre un capteur d'humidité 115 agencé pour mesurer une valeur de taux d'humidité de la matrice argileuse crue 2 transportée au second moyen de pesage 22. Le ou les processeurs 60 peuvent alors être configurés pour prendre en compte la valeur de taux d'humidité de la matrice argileuse crue transportée pour contrôler au moins un des transporteurs111, 121, 131,301 de préférence le transporteur d'argile crue 111.

### Le silo d'activateur 12

Un silo d'activateur 12 sera de préférence destiné à accueillir une composition d'activation. Ainsi, dans le cadre de la présente invention une centrale à béton d'argile crue selon la présente invention comporte un silo d'activateur 12 contenant une composition d'activation. En particulier, le silo d'activateur 12 est un silo adapté aux matières pulvérulentes. Comme cela a été mentionné, la composition d'activation 12 pourra prendre la forme d'une poudre.

Sans être limité par la théorie, la composition d'activation en combinaison avec les oxydes métalliques calcinés, de préférence renforcé par l'agent défloculant, va permettre la constitution d'un réseau entre les feuillets d'argile qui apportera ses propriétés mécaniques au béton produit par la centrale à béton selon l'invention. Ainsi, avantageusement, la centrale à béton selon l'invention comporte un silo d'activateur comportant une composition d'activation, de préférence il comporte une composition d'activation alcaline.

Avantageusement, la composition d'activation est une composition d'activation alcaline. Elle comporte alors de préférence comporte au moins une base, telle qu'une base faible ou une base forte. La composition d'activation alcaline peut de préférence comporter un ou plusieurs composés présentant un pKa supérieur ou égal à 8, de façon plus préférée supérieur ou égal à 10, de façon plus préférée supérieur ou égal à 12, de façon encore plus préférée supérieur ou égal à 14. La composition d'activation pourra être ou comporter du ciment Portland. Toutefois, de façon préférée, la composition d'activation comporte moins de 5 % en poids de clinker, de façon plus préférée moins de 2 % en poids de clinker et de façon encore plus préférée, elle ne comporte pas de clinker.

Ainsi, la composition d'activation peut comporter des sulfates, des hydroxydes, des carbonates, des silicates, des lactates, des organophosphorés, de la chaux ou leurs combinaisons.

De façon préférée, la composition d'activation comporte des hydroxydes et des silicates. En particulier, la composition d'activation peut comporter un mélange d'hydroxyde de sodium et de silicate de sodium. Lorsque la composition d'activation comporte des silicates, le pourcentage de silicate dans le mélange pour élément de maçonnerie provenant de la composition d'activation et le pourcentage de silicate dans le mélange pour élément de maçonnerie provenant de la composition d'oxydes métalliques calcinée sont comptabilisés séparément.

En particulier, la composition d'activation peut comporter un mélange de sulfate de sodium et de chlorure de sodium.

De façon préférée, la composition d'activation comporte des silicates et des carbonates. En particulier, la composition d'activation peut comporter un mélange de silicate de sodium ou de potassium et de carbonate de sodium ou de potassium.

De façon plus préférée, la composition d'activation alcaline comporte des hydroxydes.

La composition d'activation peut comporter un composé organophosphoré tel que le tripolyphosphate de sodium. De préférence le composé organophosphoré représente au moins 2% en poids du liant de construction.

De façon préférée, la composition d'activation comporte un lactate tel que du lactate de sodium, de potassium, et/ou de lithium.

Avantageusement, la composition d'activation comporte un oxyde d'un métal présentant au moins deux électrons de valence. En particulier, la composition d'activation peut comporter au moins 40 % en poids d'au moins un oxyde métallique correspondant à l'oxyde d'un métal présentant au moins deux électrons de valence. Par exemple, les au moins 40% en poids peuvent correspondre à plusieurs oxydes métalliques différents. Toutefois de façon préférée, la composition d'activation, de préférence lorsque celle-ci est une composition d'activation alcaline, pourra comporter un seul oxyde d'un métal présentant au moins deux électrons de valence ou plus de 50% en poids de cet oxyde métallique.

De façon préférée, la composition d'activation comporte au moins 50 % en poids d'au moins un oxyde métallique correspondant à l'oxyde d'un métal, ou d'un alcalinoterreux, présentant au moins deux électrons de valence, de façon plus préférée au moins 60 % en poids ; de façon encore plus préférée au moins 80 % en poids.

Comme cela sera décrit ci-après, la composition d'activation peut être une composition liquide. Toutefois de façon préférée, la composition d'activation est une composition d'activation alcaline se présentant sous la forme de poudre.

Comme illustré à la figure 1, un silo d'activateur 12 pourra être couplé aux un ou plusieurs second(s) moyen(s) de pesage par un transporteur d'activateur 121.

De préférence, le transporteur d'activateur 121 est un transporteur adapté au transport de matière pulvérulente ; de préférence, le transporteur d'activateur 121 est sélectionné parmi : une vis sans fin ou une bande de convoyage ou tout moyen équivalent.

La centrale 1 à béton d'argile crue peut comporter un capteur d'humidité 122 configuré pour mesurer une valeur de taux d'humidité de la composition d'activation. Ce capteur d'humidité 122 peut par exemple être positionné en amont du silo d'activateur 12, pour de préférence mesurer l'humidité de la composition d'activation destinée à être ajoutée au silo d'activateur 12. Alternativement ou en complément, la centrale 1 à béton d'argile crue peut comporter, au niveau du silo d'activateur 12 ou en aval du silo d'activateur 12, un capteur d'humidité 122 configuré pour mesurer une valeur de taux d'humidité de la composition d'activation. Le capteur d'humidité 122 peut par exemple être positionné au niveau du transporteur d'activateur 121 ou au niveau du ou des seconds moyens de pesage 22.

### Le silo d'oxydes métalliques 13

Un silo d'oxydes métalliques 13 sera de préférence destiné à accueillir une composition d'oxydes métalliques calcinée. Ainsi, dans le cadre de la présente invention une centrale à béton d'argile crue selon la présente invention comporte un silo d'oxydes métalliques 13 contenant une composition d'oxydes métalliques calcinée.

En particulier, le silo d'oxydes métalliques 13 est un silo adapté aux matières pulvérulentes. La composition d'oxydes métalliques calcinée pourra prendre la forme d'une poudre.

Sans être limité par la théorie, la composition d'oxydes métalliques calcinée selon l'invention permet de renforcer les liaisons entre les feuillets d'argile de façon à apporter ses propriétés mécaniques au béton produit.

Une composition d'oxydes métalliques calcinée comporte avantageusement des oxydes métalliques sélectionnés parmi : des oxydes de fer tels que FeO, Fe₃O₄, Fe₂O₃, l'alumine Al₂O₃, l'oxyde de manganèse (II) MnO, l'oxyde de titane (IV) TiO₂, l'oxyde de magnésium MgO et leurs mélanges.

Une composition d'oxydes métalliques calcinée peut également comporter des aluminosilicates.

La composition d'oxydes métalliques calcinée est par exemple sélectionnée parmi des laitiers de hauts fourneaux, des pouzzolanes telles que des cendres volcaniques, des cendres volantes, de la fumée de silice ou du métakaolin, des cendres de matières végétales telles que des cendres de riz, des résidus de bauxite ou leurs combinaisons. En particulier, la composition de silicate et d'oxydes métalliques est par exemple sélectionnée parmi des laitiers de hauts fourneaux, des pouzzolanes telles que des cendres volcaniques, des cendres volantes, de la fumée de silice, des cendres de matières végétales telles que des cendres de riz, des résidus de bauxite ou leurs combinaisons.

De façon préférée, les oxydes métalliques sont des oxydes de métaux de transition. Les oxydes métalliques peuvent de préférence provenir d'une composition de laitiers de hauts fourneaux par exemple formés lors de l'élaboration de la fonte à partir de minerai de fer.

La composition d'oxydes métalliques est dite calcinée car ses constituants ont été porté à une température supérieure ou égale à 600°C. Par exemple, la composition d'oxydes métalliques calcinée peut comporter des composés issus d'un procédé industriel comportant une combustion.

Comme illustré à la figure 1, un silo d'oxydes métalliques 13 pourra être couplé aux un ou plusieurs second(s) moyen(s) de pesage par un transporteur d'oxydes métalliques 131.

De préférence, le transporteur d'oxydes métalliques 131 est un transporteur adapté au transport de matière pulvérulente ; de préférence, le transporteur d'oxydes métalliques 131 est sélectionné parmi : une vis sans fin ou une bande de convoyage ou tout moyen équivalent.

La centrale 1 à béton d'argile crue peut comporter un capteur d'humidité 132 configuré pour mesurer une valeur de taux d'humidité de la composition d'oxydes métalliques calcinée. Ce capteur d'humidité 132 peut par exemple être positionné en amont du silo d'oxydes métalliques 13, pour de préférence mesurer l'humidité de la composition d'oxydes métalliques calcinée destinée à être ajoutée au silo d'oxydes métalliques 13. Alternativement ou en complément, la centrale 1 à béton d'argile crue peut comporter, au niveau du silo d'oxydes métalliques 13 ou en aval du silo d'oxydes métalliques 13, un capteur d'humidité 132 configuré pour mesurer une valeur de taux d'humidité de la composition d'oxydes métalliques calcinée. Le capteur d'humidité 132 peut par exemple être positionné au niveau du transporteur d'oxydes métalliques 131 ou au niveau du ou des seconds moyens de pesage 22.

### Trémie(s) à granulats 71

Une centrale 1 à béton d'argile crue selon la présente invention pourra comporter une ou plusieurs trémies à granulats 71, 72. Le sable et les graviers sont acheminés par camion, train ou bateau depuis des carrières. Généralement, à leur arrivée, ils sont stockés temporairement dans une zone de stockage primaire avant d'être transportés, par exemple via un engin de chantier ou un tapis, dans une trémie à granulats 71,72.

Une trémie à granulats 71,72 pourra être une trémie horizontale ou une trémie verticale. Une trémie à granulats 71,72 sera agencés de façon à pouvoir stocker du sable ou des gravillons.

Classiquement les granulats pourront correspondre à des granulats naturels, des granulats artificiels ou encore des granulats recyclés.

Les granulats pourront en outre comporter des granulats minéraux, c'est-à-dire principalement constitués de matière minérale et/ou des granulats végétaux, c'est-à-dire principalement constitués de matière d'origine végétale. Les granulats pourront aussi comporter des granulats marins, c'est-à-dire principalement constitués de matière organique ou inorganique provenant des fonds marins tels que des granulats siliceux et des substances calcaires (e.g. maërl et sables coquilliers).

Les granulats minéraux pourront par exemple correspondent à du sable, des gravillons, des graviers, des fillers (ou matériaux fins), des poudres, déchets fossilisés et à leur combinaison.

Les granulats végétaux pourront par exemple correspondre à du bois (copeaux ou fibres), du chanvre, de la paille, de la chènevotte de chanvre, du miscanthus, du tournesol, du typha, du maïs, du lin, des balles de riz, des balles de blé, du colza, des algues, du bambou, la ouate de cellulose, du tissu défibré et à leur combinaison.

Comme illustré à la figure 1, une ou plusieurs trémies à granulats 71, 72 sont couplées au premier moyen de pesage par un ou plusieurs transporteurs à granulats 711, 721.

Le transporteur à granulats pourra être de tout type susceptible de déplacer des granulats. De façon préférée, un transporteur à granulats 711 pourra prendre la forme d'un tapis, ou d'une bande de convoyage.

La centrale 1 à béton d'argile crue peut comporter un capteur d'humidité 712 configuré pour mesurer une valeur de taux d'humidité de granulats. Ce capteur d'humidité 712 peut par exemple être positionné en amont d'une trémie à granulats 71, pour de préférence mesurer l'humidité des granulats destinés à être ajoutés à la trémie à granulats 71. Alternativement ou en complément, la centrale 1 à béton d'argile crue peut comporter, au niveau de la trémie à granulats 71 ou en aval de la trémie à granulats 71, un capteur d'humidité 712 configuré pour mesurer une valeur de taux d'humidité des granulats. Le capteur d'humidité 712 peut par exemple être positionné au niveau du transporteur de granulat 711 ou au niveau du moyen de pesage 21.

Bien que l'effet soit moins fort que pour l'argile crue, une différence d'humidité entre les granulats peut entrainer une différence de ratio entre granulats ou entre les granulats et les autres constituants du béton d'argile crue. Une telle différence peut avoir un impact sur la qualité du béton d'argile crue produit.

Avec une mesure de l'humidité des granulats et donc de la teneur en eau de ces granulats, il est possible de configurer le ou les processeurs 60 de façon à ce qu'il commande la centrale 1 à béton d'argile crue de telle manière à ce que cette teneur en eau soit compensée.

### Moyens de pesage

Comme cela a été mentionné, une centrale à béton selon la présente invention dispose d'au moins deux moyens de pesage : un premier moyen de pesage 21 et un ou plusieurs seconds moyens de pesage 22.

Ces moyens de pesage 21, 22 présente avantageusement des gammes de mesure et des précisions différentes et adaptées aux matières qu'ils sont agencés pour peser.

En particulier, le premier moyen de pesage 21 peut présenter une précision de mesure de 2 kg ou plus, de préférence 4 kg ou plus. En outre, le premier moyen de pesage 21 peut présenter une capacité d'au moins 400 kg, de préférence d'au moins 600 kg de granulats. Par exemple, un premier moyen de pesage 21 présentera une capacité d'au moins 1 m³, de préférence d'au moins 1,5 m³.

Le ou les premiers moyens de pesage 21 sont dédiés au pesage des granulats. Ils peuvent par exemple prendre la forme de tapis peseur ou de balance à bascule.

Dans un mode de réalisation, une centrale selon la présente invention comporte un tapis d'amené agencé pour transporter les granulats, une fois pesés, jusqu'au malaxeur 50.

En particulier, les uns ou plusieurs second(s) moyen(s) de pesage 22 présentent une précision de mesure de 1 kg ou moins, de préférence de 0,5 kg ou moins. Cela est particulièrement important dans le cadre de la présente invention pour obtenir un béton présentant de bonnes performances. En outre, un second moyen de pesage 22 peut présenter une capacité d'au plus 2000 kg, de préférence d'au plus 1000 kg de façon plus préférée d'au plus 500 kg. Par exemple, un second moyen de pesage 22 présentera une capacité d'au plus 2 m³, de préférence d'au plus 0,5 m³, de façon plus préférée d'au plus 0,3 m³.

En particulier, une centrale à béton d'argile selon la présente invention pourra être configuré pour ne comporter qu'un seul second moyen de pesage 22 couplé au transporteur d'argile crue 111, au transporteur d'activateur 121 et au transporteur d'oxydes métalliques 131.

### Réservoir à adjuvant

Comme illustré à la figure 1, une centrale à béton selon la présente invention comporte un ou plusieurs réservoirs à adjuvant 40.

De façon préférée, une centrale à béton d'argile selon la présente invention comporte plusieurs réservoirs à adjuvant.

Les réservoirs à adjuvant pourront comporter chacun un adjuvant différent : tel qu'un accélérateur de prise, un retardateur, un plastifiant...

En outre, une centrale à béton d'argile selon la présente invention comporte au moins un réservoir à défloculant.

Le ou les réservoirs à défloculant comporteront de préférence chacun un défloculant organique.

Comme cela a été abordé, la présence d'un ou de plusieurs défloculants peut améliorer les performances de fabrication du béton selon l'invention. Ainsi, avantageusement, une gâchée de béton produite dans le cadre de l'invention comporte un défloculant, avantageusement un défloculant organique.

De nombreux composés peuvent faire office d'agents défloculant et beaucoup sont généralement connus de l'homme du métier.

Dans le cadre de l'invention, l'agent défloculant est en particulier un surfactant non-ionique tel qu'un éther de polyoxyéthylène. L'éther de polyoxyéthylène peut par exemple être sélectionné parmi : un éther de lauryl poly(oxyéthylène).

L'agent défloculant peut aussi être un agent anionique tel qu'un surfactant anionique. En particulier, l'agent anionique peut être sélectionné parmi : des sulfonates d'alkylaryle, des aminoalcool, des acides gras, des humates (e.g. humates de sodium), des acides carboxyliques, des lignosulfonates (e.g. lignosulfonates de sodium), des polyacrylates, des carboxyméthylcelluloses et leurs mélanges.

L'agent défloculant peut aussi être un polyacrylate. Il peut alors être sélectionné par exemple parmi du polyacrylate de sodium et du polyacrylate d'ammonium.

L'agent défloculant peut également être une amine sélectionnée par exemple parmi: les 2-amino-2-methyl-1-propanol ; mono-, di- ou triethanolamine ; les isopropanolamines (1-amino-2-propanol, diisopropanolamine et triisopropanolamine) et N-alkylated ethanolamines.

Alternativement, l'agent défloculant peut être un mélange de composés, tel qu'un mélange comportant au moins deux composés sélectionnés parmi : surfactant non-ionique, agent anionique, polyacrylate, amine et composé organophosphoré.

L'agent défloculant est de préférence un agent défloculant organique. Selon la présente invention, un agent défloculant organique comporte au moins un atome de carbone et de préférence au moins une liaison carbone-oxygène. De façon préférée, l'agent de défloculation organique est sélectionné parmi : un lignosulphonate (e.g. lignosulphonate de sodium), un polyacrylate, un humate, un polycarboxylate tel qu'un polycarboxylate d'ether, et leurs mélanges. De façon plus préférée, l'agent de défloculation comporte un humate, un lignosulphonate et/ou un polyacrylate.

L'agent défloculant est de préférence utilisé sous forme d'un sel. Cependant, l'invention ne saurait se limiter aux agents défloculant cités précédemment ou leurs sels. Cependant, l'invention ne saurait se limiter aux agents défloculants organiques cités précédemment. Tout type d'agent défloculant organique connu par l'homme du métier peut être utilisé en lieu et place desdits agents défloculant cités précédemment.

Les réservoirs sont de préférence surélevés et peuvent être installés dans des compartiments hors gel.

Les adjuvants ou les défloculants utilisables dans une centrale à béton d'argile selon la présente invention pourront prendre une forme solide ou une forme liquide. Ainsi, une centrale à béton d'argile selon la présente invention comportera des moyens de mesure d'adjuvants et/ou de défloculants sous forme liquide ou solide. Avantageusement, le ou les moyens de mesure sont configuré pour ajouter juste la bonne quantité d'adjuvant en fonction de la matrice argileuse crue utilisée et en particulier en fonction des valeurs de caractéristiques de la matrice argileuse crue mesurées.

En outre, un moyen de mesure d'adjuvant sera de préférence agencé de façon à pouvoir mesurer et prélever une dose précise adaptée à la capacité du malaxeur 50.

Une centrale à béton d'argile selon la présente invention comportera des moyens de mesure pourra comporter un moyen de mesure d'adjuvants sous forme solide, par exemple par pesée.

Une centrale à béton d'argile selon la présente invention pourra comporter un moyen de mesure d'adjuvants sous forme liquide.

### Réservoir d'eau

Une centrale à béton d'argile crue pourra classiquement comporter un réservoir d'eau. Le réservoir pourra être agencé pour comporter de l'eau de réseau (potable), mais aussi une eau naturelle de préférence décantée ou une eau chargée.

### Un malaxeur

Une centrale à béton d'argile crue pourra classiquement comporter un malaxeur 50.

Le malaxeur 50 d'une centrale 1 à béton d'argile crue selon la présente invention pourra être de tous types permettant un malaxage des matière premières à la base du béton d'argile crue. La cuve pourra être de forme annulaire, cylindrique, ou en tambour et le malaxage pourra impliquer des pales mais aussi un tourbillon, un mouvement épicycloïdal, ou une hélice spire.

En particulier, une centrale d'argile crue selon la présente invention comportera un moyen de mesure 502 d'une valeur de couple de malaxage du malaxeur 50. Cette valeur peut être mesurée de préférence en continu, par exemple via la mesure de la puissance électrique consommée par le malaxeur 50.

En outre, certains couples peuvent être plus adaptés à un malaxage efficace d'un béton d'argile crue. De préférence, le ou les processeurs 60 sont en outre configurés pour adapter ou commander le transport d'un ou de plusieurs adjuvants au malaxeur en fonction de la valeur de couple de malaxage mesurée, en particulier en fonction de la puissance électrique consommée par le malaxeur 50.

En outre, un malaxeur 50 pourra comporter un capteur pour la mesure de l'humidité du mélange malaxé - par exemple une sonde micro-ondes placée dans le malaxeur 50 - pour permettre un ajout d'eau en conséquence. Ce capteur d'humidité ou plus largement les capteurs d'humidité utilisé dans le cadre de la présente centrale à béton d'argile crue pourront correspondre à une sonde micro-ondes, un dispositif d'analyse thermogravimétrique ou encore un système comportant un four et une balance.

### Moyens d'analyse des matières premières

Comme cela a été mentionné, la centrale 1 à béton d'argile crue selon la présente invention permet de réaliser la formation d'un liant avec une qualité et des proportions maitrisées de chacun de ces constituants pour former un béton d'argile crue. Pour cela, une centrale 1 à béton d'argile crue selon la présente invention peut comporter des moyens d'analyse et de caractérisation des matières premières utilisées qui pourront de préférence être positionnés au niveau des moyens de transport.

Une centrale 1 à béton d'argile crue selon la présente invention pourra comporter, de préférence au niveau des moyens de transport, des capteurs optiques capables d'analyser la forme et/ou la couleur des matières premières. La centrale 1 à béton d'argile crue peut alors comporter un trieur (mécanique, jet d'air...) commandé par un processeur et capable d'éliminer des éléments indésirables détectés par le capteur optique. Alternativement ou en complément, le ou les processeurs pourront être configurés pour apporter une quantité plus ou moins importante de matière première au malaxeur 50 en fonction d'une valeur de caractéristique calculée.

Une centrale 1 à béton d'argile crue selon la présente invention pourra comporter, de préférence au niveau des moyens de transport, un scanner à rayons X capable de générer une image radiographique. A partir de cette image radiographique ou de plusieurs images radiographiques des processeurs pourront être configurés pour calculer une densité. La centrale 1 à béton d'argile crue peut alors comporter un trieur (mécanique, jet d'air...) commandé par un processeur et capable d'éliminer des éléments indésirables en fonction de leur densité calculée. Alternativement ou en complément, le ou les processeurs pourront être configurés pour apporter une quantité plus ou moins importante de matière première au malaxeur 50 en fonction de la valeur de densité calculée.

Une centrale 1 à béton d'argile crue selon la présente invention pourra comporter, de préférence au niveau des moyens de transport, un ou plusieurs spectromètres. Ces spectromètres pourront être chacun configurés pour générer des spectres pour différentes longueur d'onde tels que des spectres infrarouge, spectres proches infrarouge, spectre de Raman, spectre XPS (spectrométrie photoélectronique X), spectre de fluorescence des rayons X classique ou en réflexion totale. A partir de ce ou ces spectres, un ou plusieurs processeurs pourront être configurés pour calculer une valeur de caractéristique d'une matière première. La centrale 1 à béton d'argile crue peut notamment comporter un trieur (mécanique, jet d'air...) commandé par un processeur et capable d'éliminer des éléments indésirables en fonction de la valeur de caractéristique calculée. Alternativement ou en complément, le ou les processeurs pourront être configurés pour apporter une quantité plus ou moins importante de matière première au malaxeur 50 en fonction de la valeur de caractéristique calculée.

Une centrale 1 à béton d'argile crue selon la présente invention pourra comporter, de préférence au niveau des moyens de transport, un ou plusieurs compteurs Geiger et un ou plusieurs magnétomètres pour déterminer le comportement sous sollicitation d'un champ magnétique. Le ou les processeurs pourront être configurés pour apporter une quantité plus ou moins importante de matière première au malaxeur 50 en fonction de valeurs ainsi générées.

### Le ou les processeurs

Comme cela a été mentionné, la centrale 1 à béton d'argile crue selon la présente invention peut être avantageusement agencée de façon à être au moins en partie commandée par un ou plusieurs processeurs 60. En particulier, une centrale 1 selon l'invention pourra comporter un automate central contrôlé à partir d'une armoire de commande dédiée.

De préférence, les processeurs 60 sont configurés pour contrôler les transporteurs 111, 121, 131, 711 en fonction de valeurs générées par les un ou plusieurs second(s) moyen(s) de pesage.

En effet, si des bétons aux performances élevées sont souhaités (e.g. : bétons C25/30 et plus ; par exemple C30/37 ou encore C40/50 ou C45/55), les quantités combinées de la matrice argileuse crue avec la composition d'oxydes métalliques calcinée, la composition d'activation et le défloculant doivent être sélectionnées avec précision. Ainsi, la centrale à béton d'argile crue comporte deux moyens de pesage différents permettant d'assurer une mesure suffisamment juste de la teneur des différents constituants du béton.

Les inventeurs ont identifié une importance de la quantité massique d'oxydes métalliques en combinaison avec la matrice argileuse crue. De façon préférée, les processeurs seront configurés pour commander la centrale à béton de façon à ce qu'une gâchée de béton comporte, au moins 1 % en poids sec d'oxydes métalliques, de façon plus préférée au moins 2% en poids, de façon encore plus préférée au moins 3% en poids.

Par exemple, les processeurs seront configurés pour commander la centrale à béton de façon à ce qu'une gâchée comporte au moins 1 % en poids d'une composition d'oxydes métalliques calcinée, de façon préférée au moins 2 % en poids d'une composition d'oxydes métalliques calcinée, de façon plus préférée au moins 3 % en poids d'une composition d'oxydes métalliques calcinée et de façon encore plus préférée au moins 4 % en poids d'une composition d'oxydes métalliques calcinée. Par exemple, au moins 5 % en poids d'une composition d'oxydes métalliques calcinée ou au moins 10 % en poids d'une composition d'oxydes métalliques calcinée.

Par exemple, une gâchée pourra comporter au moins 2% en poids sec d'une composition de laitiers de hauts fourneaux. De façon avantageuse, une gâchée comportera en outre au moins 3 % en poids d'au moins un oxyde métallique correspondant à l'oxyde d'un métal présentant au moins deux électrons de valence. De façon préférée, les au moins 3 % en poids peuvent être formé à partir de plusieurs oxydes métalliques différents. Ces oxydes métalliques pourront provenir de plusieurs sources. De façon préférée, les oxydes métalliques formés avec un métal présentant au moins deux électrons de valence seront contenus dans la composition d'activation et/ou dans la composition d'oxydes métalliques calcinée. De façon préférée, une gâchée comporte au moins 3 % en poids d'au moins un oxyde métallique correspondant à l'oxyde d'un métal présentant au moins deux électrons de valence, de façon plus préférée au moins 4 % en poids.

Néanmoins, contrairement à d'autres solutions techniques privilégiant une concentration très élevée de laitiers de haut fourneaux, cendres volantes ou métakaolin, les inventeurs de la présente invention ont déterminé qu'il était préférable de ne pas dépasser certaines concentrations. Ainsi, dans une gâchée, le liant comporte de préférence au plus 70 % en poids sec d'oxydes métalliques, de façon plus préférée au plus 60 % en poids sec d'oxydes métalliques et de façon encore plus préférée au plus 50 % en poids sec d'oxydes métalliques. De même, à titre d'exemple, une gâchée pourra avantageusement comporter moins de 30 % en poids sec d'oxydes métalliques, de préférence moins de 20 %, de façon plus préférée moins de 10%.

En outre, les inventeurs ont identifié que certaines valeurs de rapport entre la quantité massique de composition d'oxydes métalliques calcinée et la quantité massique de matrice argileuse crue permettait d'améliorer les performances d'un béton ainsi constitué. Avantageusement, les processeurs seront configurés pour commander la centrale à béton de façon à ce que la composition d'oxydes métalliques calcinée et la matrice argileuse crue sont mélangées pour former une gâchée présentant un ratio massique en poids sec de la composition d'oxydes métalliques calcinée sur la matrice argileuse crue compris entre 0,2 et 3, de préférence 0,4 et 2,5, de façon plus préférée 0,5 et 2.

En particulier, les processeurs pourront être configurés pour que la composition d'oxydes métalliques calcinée représente de 20 % à 70 % en poids sec du mélange de matrice argileuse crue et de composition d'activation ; de façon préférée, de 30 % à 45 % ; de façon plus préférée, de 55 % à 70 % en poids sec du mélange de matrice argileuse crue et de composition d'activation.

En outre, les processeurs 60 pourront être configurés pour que la composition d'activation soit présente à une teneur d'au moins 0,1 % en poids sec dans une gâchée, de préférence d'au moins 0,2 % en poids sec d'une gâchée.

Le ou les processeurs pourront être configurés pour que la composition d'activation représente de 0,2 % à 50 % en poids sec du mélange de matrice argileuse crue et de la composition d'oxydes métalliques calcinée, de préférence de 20 % à 40 % en poids sec, de façon plus préférée de 2 % à 40 % en poids sec et de façon encore plus préférée de 10 % à 25 % en poids sec.

Avantageusement, le ou les processeurs pourront être configurés pour que qu'une gâchée comporte entre 2 et 10 % en poids sec d'une composition d'activation.

Avantageusement, le ou les processeurs pourront être configurés pour que l'agent défloculant représente au moins 0,5 % en poids sec de la matrice argileuse crue, de préférence au moins 1 % en poids sec de la matrice argileuse crue, de façon plus préférée au moins 2 % en poids sec de la matrice argileuse crue, de façon encore plus préférée au moins 3 % en poids sec de la matrice argileuse crue, et par exemple au moins 4 % en poids sec de la matrice argileuse crue.

En particulier, dans une gâchée, l'agent défloculant peut représenter au moins 0,001 % en poids sec, de préférence au moins 0,0015 % en poids sec, de façon plus préférée au moins 0,07 % en poids sec.

Comme cela a été présenté, des bétons de performance élevé En outre, la combinaison de ces composants peut être sensible à des variations d'humidité pouvant survenir avant la livraison ou lors du stockage des matières premières. Ainsi, une prise en compte de l'humidité peut permettre d'améliorer les performances du béton.

Ainsi, comme cela a été décrit, les rapports massiques calculé en poids sec entre les différents constituants d'une gâché ont une importance vis-à-vis des performances des bétons obtenus.

Ainsi, avantageusement, une centrale à béton d'argile selon la présente invention peut comporter un capteur d'humidité agencé pour mesurer une valeur de taux d'humidité de la matrice argileuse crue 2, de préférence une valeur de taux d'humidité de la matrice argileuse crue pesée. En effet, les quantités combinées de matrice argileuse crue avec la composition d'oxydes métalliques calcinée, la composition d'activation et le défloculant doivent être sélectionnées avec précision de façon à ce que le béton produit soit performant. Un béton performant produit dans le cadre de la présente invention répondra de préférence aux recommandations de la norme EN206. Un béton performant produit dans le cadre de la présente invention pourra correspondre à un béton C25/30 et plus ; par exemple C30/37 ou encore C40/50 ou C45/55.

Le ou les processeurs 60 peuvent être configurés pour prendre en compte la valeur de taux d'humidité de la matrice argileuse crue, de préférence de la matrice argileuse crue pesée, pour contrôler au moins un des transporteurs 111, 121, 131,301 de préférence le transporteur d'argile crue 111. Ainsi, en fonction de l'humidité de la matrice argileuse crue, les processeurs pourront commander la centrale à béton de façon qu'une quantité de matrice argileuse crue adéquate soit ajoutée au malaxeur. Alternativement ou en complément, c'est une quantité de composition d'activation, de composition d'oxydes métalliques calcinée, d'adjuvants et/ou de défloculant ajoutée au malaxeur 50 qui sera commandée par le ou les processeurs 60.

L'utilisation de matrice argileuse crue, en particulier d'argile crue, comme composant majeur du liant hydraulique d'un béton haute performance n'avait jusqu'à récemment pas été considérée comme possible. Une telle utilisation en particulier dans une centrale à béton, peut bénéficier de l'exploitation de valeurs de caractéristiques de la matrice argileuse crue telles que des valeurs de granulométrie de la matrice argileuse crue, ou encore de fluorescence X. Avantageusement, le ou les processeurs 60 peuvent être configurés pour prendre en compte une valeur de granulométrie de la matrice argileuse crue, de préférence de la matrice argileuse crue pesée, et/ou une valeur de fluorescence X pour contrôler au moins un des transporteurs111, 121, 131, 301 de préférence le transporteur d'argile crue 111. Ainsi, la formulation et par exemple l'adjuvantation est adaptée par les processeurs en fonction de valeurs mesurées sur la matrice argileuse crue.

De façon préférée, le ou les processeurs 60 d'une centrale à béton d'argile selon la présente invention sont en outre configurés pour adapter ou commander le transport d'un ou de plusieurs adjuvants au malaxeur 50 en fonction des valeurs de fluorescence X mesurées de la matrice argileuse crue 2.

De façon plus préférée, le ou les processeurs 60 pourront être configurés pour calculer un indice d'activité de la matrice argileuse crue à partir notamment de valeurs de fluorescence X mesurées de la matrice argileuse crue 2. En outre, le ou les processeurs d'une centrale à béton d'argile selon la présente invention peuvent être configurés pour adapter le transport d'un ou de plusieurs adjuvants au malaxeur en fonction de l'indice d'activité de la matrice argileuse crue calculé. De façon encore plus préférée, le calcul de l'indice d'activité de la matrice argileuse crue comporte l'utilisation des valeurs de granulométrie et de fluorescence X mesurées dans la centrale à béton d'argile crue.

Comme cela a été mentionné la matrice argileuse crue peut présenter une fluctuation importante de ses caractéristiques pouvant impacter la performance du béton d'argile crue généré. Dans ces conditions, une centrale à béton d'argile crue selon la présente invention est avantageusement agencée pour permettre un contrôle en continue de la conformité des matières premières utilisées.

Ainsi, le ou les processeurs 60 peuvent être configurés pour comparer les valeurs de caractéristiques de la matrice argileuse crue (e.g. granulométrie et de fluorescence X) mesurées à des seuils prédéterminés. Lorsque les valeurs ne sont pas conformes aux seuils prédéterminés alors une alerte peut être générée.

En outre, ces valeurs mesurées pourront être associées à une gâchée de béton. De façon préférée, ces valeurs mesurées sont chiffrées avant d'être associées à une gâchée de béton. Ainsi, les valeurs peuvent rester confidentielles tout en étant accessible en cas de besoin.

En outre, les valeurs mesurées de caractéristiques d'argile crue, chiffrées ou non, les paramètres de production d'une gâchée de béton d'argile crue et un identifiant de ladite gâchée concernée pourront faire l'objet d'un enregistrement. L'enregistrement pourra comporter une sécurisation des données pour en éviter la falsification (e.g. utilisation de certificat ou de tiers de confiance).

Ainsi, une dérive de la qualité de la matière première utilisée entrainant des non-conformités sur les bétons générés pourra être rapidement identifiée et corrigée.

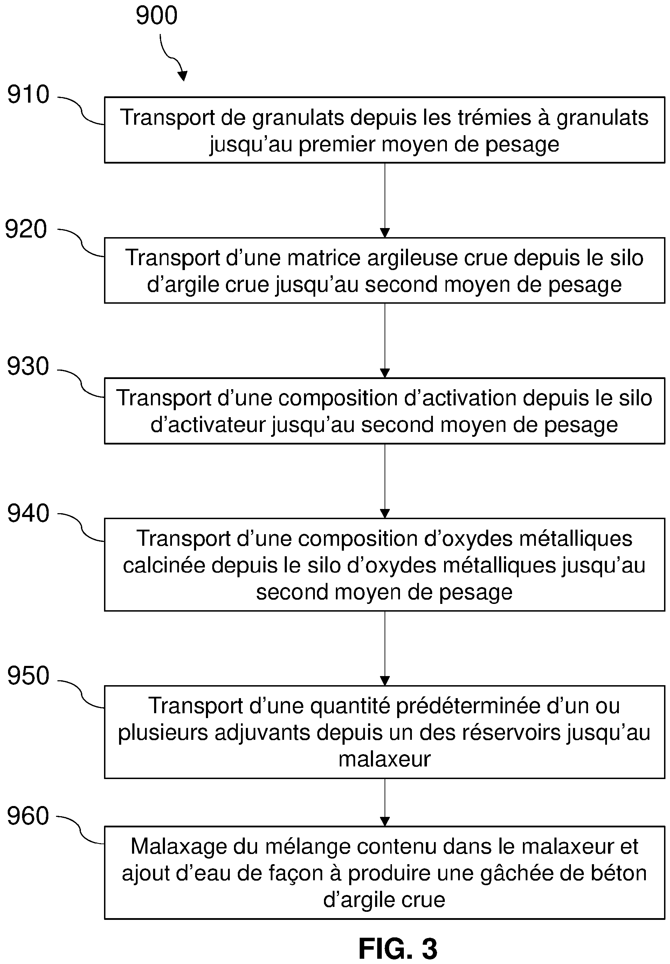

**Selon un autre aspect,** la présente invention, décrit en lien avec la figure **3****,** porte sur un **procédé 900 de commande d'une centrale à béton d'argile crue.**

En effet, une centrale à béton d'argile crue selon la présente invention est de préférence conçue pour fonctionner d'une manière au moins partiellement automatique. Un procédé selon la présente invention pourra comporter comme étapes les différents modes de réalisation et notamment les configurations des processeurs de la centrale à béton selon la présente invention.

Le procédé de commande selon la présente invention pourra par exemple comporter des étapes de :
- Contrôle d'un acheminement des matériaux, par exemple à partir d'une valeur de pesage par les moyens de pesage 21,22 ;
- Mesure et si nécessaire correction de l'humidité du béton produit dans le malaxeur ;
- Estimation du niveau de fluidité du béton dans le malaxeur ; et
- Contrôle du malaxage du mélange

Les granulats pourront être la première matière à être ajoutée au malaxeur 50. Ils sont généralement transportés depuis leur trémie vers le premier moyen de pesage. Ainsi, le procédé pourra comporter un transport de granulats 910 depuis les trémies à granulats jusqu'au premier moyen de pesage 21. Ce transport pourra être réalisée par le transporteur à granulats 711. En particulier, l'arrêt du transport pourra être commandé par un ou plusieurs processeurs 60 lorsqu'une valeur mesurée de poids de granulat aura atteint un seuil prédéterminé.

Une fois qu'une quantité adéquate d'un ou de plusieurs granulats aura été pesée alors ils pourront être transféré, par exemple par simple déversement, depuis le premier moyen de pesage 22 jusqu'au malaxeur 50.

Les autres éléments du mélange pourront être transportés depuis leurs silos vers des trémies d'attente (au moyen de tapis ou pompes) ou bien directement versés successivement dans les uns ou plusieurs moyens de pesage avant d'être transférés dans le malaxeur à la suite des granulats.

La matrice argileuse crue peut être le premier constituant du liant à être ajouté. Le procédé peut comporter une étape de transport de la matrice 920 argileuse crue 2 depuis le silo d'argile crue 11 jusqu'au second moyen de pesage 22. Ce transport peut être réalisé par le transporteur d'argile crue 111. Les uns ou plusieurs processeurs 60 pourront être configurés pour commander l'arrêt du transport lorsqu'une valeur mesurée de poids de matrice argileuse crue 2 atteint un seuil prédéterminé. Ce seuil prédéterminé pourra correspondre à une valeur mémorisée dans le cadre d'une composition de béton donnée, mais il pourra également correspondre à une valeur calculée par un ou plusieurs processeurs en prenant en compte une ou plusieurs caractéristiques de la matrice argileuse crue telles qu'un taux d'humidité, des valeurs de fluorescence X, ou encore une valeur de granulométrie. En outre, le procédé pourra comporter un transfert de la matrice argileuse crue (e.g. via gravité, vis sans fin ou tapis) depuis le second moyen de pesage 22 jusqu'au malaxeur 50.

Un procédé selon l'invention pourra également comporter un transport de la composition d'activation 930 depuis le silo d'activateur 12 jusqu'au second moyen de pesage 22. Ce transport pourra être réalisé par le transporteur d'activateur 121 et pourra également être commandé par le ou les processeurs 60.

En outre, l'arrêt du transport pourra être commandé par l'un ou les processeurs 60 lorsqu'une valeur mesurée de poids de composition d'activation atteint un seuil prédéterminé. Ce seuil prédéterminé pourra correspondre à une valeur mémorisée dans le cadre d'une composition de béton donnée, mais il pourra également correspondre à une valeur calculée par un ou plusieurs processeurs 60 en prenant en compte une ou plusieurs caractéristiques de la matrice argileuse crue telles qu'un taux d'humidité, des valeurs de fluorescence X, ou encore une valeur de granulométrie. En outre, le procédé pourra comporter un transfert de la composition d'activation (e.g. via gravité, vis sans fin ou tapis) depuis le second moyen de pesage 22 jusqu'au malaxeur 50.

Un procédé selon la présente invention pourra comporter un transport de la composition d'oxydes métalliques 940 calcinée depuis le silo d'oxydes métalliques 13 jusqu'au second moyen de pesage 22. Ce transport pourra être réalisé par le transporteur d'activateur 131, par exemple selon une commande d'un ou plusieurs processeurs.

En outre, l'arrêt du transport pourra être commandé par l'un ou les processeurs 60 lorsqu'une valeur mesurée de poids de composition d'oxydes métalliques calcinée atteint un seuil prédéterminé. Ce seuil prédéterminé pourra correspondre à une valeur mémorisée dans le cadre d'une composition de béton donnée, mais il pourra également correspondre à une valeur calculée par un ou plusieurs processeurs 60 en prenant en compte une ou plusieurs caractéristiques de la matrice argileuse crue telles qu'un taux d'humidité, des valeurs de fluorescence X, ou encore une valeur de granulométrie. En outre, le procédé pourra comporter un transfert de la composition d'oxydes métalliques calcinée (e.g. via gravité, vis sans fin ou tapis) depuis le second moyen de pesage 22 jusqu'au malaxeur 50.

En outre, un procédé selon l'invention pourra comporter un transport d'une quantité prédéterminée d'un ou plusieurs adjuvants 950 depuis un des réservoirs jusqu'au malaxeur 50. Ce transport pourra être réalisé par un moyen de dosage volumétrique 23 ou par un moyen de transport couplé à un moyen de dosage volumétrique 23.

Enfin, un procédé selon l'invention pourra comporter un malaxage 960 du mélange et un ajout d'eau de façon à produire une gâchée de béton d'argile crue. Le temps de malaxage est de préférence d'au moins 50 secondes

Grace aux différents moyens de pesés et dans certains modes de réalisation grâce aux moyens de mesure de l'humidité, la matrice argileuse crue arrive en quantité précise. En outre, grâce aux mesures de valeurs caractéristiques de la matrice argileuse crue, la matrice argileuse crue et les autres composants peuvent arriver dans le malaxeur en quantité adaptées aux valeurs caractéristiques de la matrice argileuse crue mesurées.

Une fois une gâchée de béton fabriquée, celle-ci est déversée dans un camion toupie, une mixo pompe ou encore un camion tapis selon les caractéristiques d'accessibilité du chantier.

Selon un autre aspect, l'invention porte sur un programme d'ordinateur comprenant des instructions de code de programme pour l'exécution des étapes d'un procédé selon l'invention lorsque ledit programme est exécuté sur un ordinateur.

L'invention peut faire l'objet de nombreuses variantes et applications autres que celles décrites ci-dessus. En particulier, sauf indication contraire, les différentes caractéristiques structurelles et fonctionnelles de chacune des mises en œuvre décrite ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

1. Centrale (1) à béton d'argile crue comportant :
- un premier moyen de pesage (21) ;
- un ou plusieurs second(s) moyen(s) de pesage (22), distinct(s) du premier moyen de pesage (21) ;
- un moyen de dosage volumétrique (23) ;
ladite centrale (1) à béton d'argile comportant en outre :
- Un silo d'argile crue (11) destiné à accueillir une matrice argileuse crue (2), et couplé aux un ou plusieurs second(s) moyen(s) de pesage (22) par un transporteur d'argile crue (111) ;
- Un silo d'activateur (12) destiné à accueillir une composition d'activation, et couplé aux un ou plusieurs second(s) moyen(s) de pesage par un transporteur d'activateur (121);
- Un silo d'oxydes métalliques (13) destiné à accueillir une composition d'oxydes métalliques calcinée, et couplé aux un ou plusieurs second(s) moyen(s) de pesage (22) par un transporteur d'oxydes métalliques (131);
- Une ou plusieurs trémies à granulats (71), couplé(s) au premier moyen de pesage par un transporteur à granulats (711);
- Un réservoir d'eau (30) ;
- Un ou plusieurs réservoirs à adjuvants (40) ; et
- Un malaxeur (50) configuré pour former une gâchée de béton d'argile crue (3), à partir de la matrice argileuse crue, de la composition d'activation, de la composition d'oxydes métalliques calcinée, des granulats, des adjuvants et de l'eau ;
ladite centrale (1) à béton d'argile crue étant agencée de façon à être au moins en partie commandée par un ou plusieurs processeurs (60), lesdits processeurs (60) étant configurés pour contrôler les transporteurs (111, 121, 131, 711) en fonction de valeurs générées par les un ou plusieurs second(s) moyen(s) de pesage (22).

2. Centrale à béton d'argile crue selon la revendication 1, **caractérisé en ce que** le premier moyen de pesage (21) présente une précision de mesure de 5 kg ou plus, avec de préférence une capacité d'au moins 1 m³ ; et **en ce que** les uns ou plusieurs second(s) moyen(s) de pesage (22) présentent une précision de mesure de 1 kg ou moins, de préférence de 0,5 kg ou moins, avec de préférence une capacité d'au moins 0,1 m³.

3. Centrale à béton d'argile crue selon l'une des revendications 1 ou 2, **caractérisé en ce que** le ou lesdits second(s) moyen(s) de pesage sont agencés pour effectuer une mesure de valeurs de pesée de la matrice argileuse crue et/ou de la composition d'oxydes métalliques calcinée et/ou de la composition d'activation.

4. Centrale à béton d'argile crue selon l'une quelconque des revendications 1 à 3, **caractérisé en ce que** le ou les processeurs (60) sont configurés pour commander la centrale à béton de façon à ce que la gâchée de béton d'argile crue comporte au moins 2 % en poids de la composition d'oxydes métalliques calcinée, de façon préférée au moins 2 % en poids d'une composition de laitiers de hauts fourneaux.

5. Centrale à béton d'argile crue selon l'une quelconque des revendications 1 à 4, **caractérisé en ce qu'**elle comporte :
- un capteur d'humidité (112) configuré pour mesurer une valeur de taux d'humidité de la matrice argileuse crue (2),
- un spectromètre à fluorescence X (113) configuré pour mesurer une valeur d'indice de qualité de la matrice argileuse crue et/ou une valeur d'indice d'homogénéité de la matrice argileuse crue (2), et/ou
- un granulomètre laser en ligne (114) configuré pour mesurer au moins une valeur de granulométrie de la matrice argileuse crue (2),
et **en ce que** le ou les processeurs (60) sont configurés pour :
- comparer la valeur de taux d'humidité, la valeur d'indice de qualité, la valeur d'indice d'homogénéité et/ou la valeur de granulométrie à une ou plusieurs valeurs de seuil prédéterminé ; et
- émettre une alerte lorsqu'une valeur mesurée dépasse le seuil prédéterminé correspondant.

6. Centrale à béton d'argile crue selon la revendication précédente, **caractérisé en ce que** le capteur d'humidité (112), le spectromètre à fluorescence X (113) et/ou le granulomètre laser en ligne (114) sont positionnés en amont du silo d'argile crue (11) et de préférence sont intégrés à un conteneur tampon (81) destiné à établir une interface entre des camions bananes et le silo d'argile crue (11).

7. Centrale à béton d'argile crue selon l'une quelconque des revendications 1 à 4, **caractérisé en ce qu'**elle comporte :
- un capteur d'humidité (112) configuré pour mesurer une valeur de taux d'humidité de la matrice argileuse crue (2),
- un spectromètre à fluorescence X (113) configuré pour mesurer une valeur d'indice de qualité de la matrice argileuse crue et/ou une valeur d'indice d'homogénéité de la matrice argileuse crue (2), et/ou
- un granulomètre laser en ligne (114) configuré pour mesurer au moins une valeur de granulométrie de la matrice argileuse crue (2),
et **en ce que** le ou les processeurs (60) sont configurés pour calculer une quantité à ajouter de matrice argileuse crue, de composition d'activation, de composition d'oxydes métalliques et/ou d'adjuvant en fonction de la valeur de taux d'humidité de la matrice argileuse crue, de la valeur d'indice de qualité de la matrice argileuse crue, de la valeur d'indice d'homogénéité de la matrice argileuse crue, et/ou de l'au moins une valeur de granulométrie de la matrice argileuse crue.

8. Centrale à béton d'argile crue selon l'une quelconque des revendications 1 à 4, **caractérisé en ce qu'**elle comporte un spectromètre à fluorescence X (113) configuré pour mesurer des valeurs de fluorescence X de la matrice argileuse crue, le ou les processeurs étant en outre configurés pour commander le transport d'un ou de plusieurs adjuvants au malaxeur en fonction des valeurs de fluorescence X mesurées de la matrice argileuse crue (2).

9. Centrale à béton d'argile crue selon l'une quelconque des revendications 1 à 8, **caractérisé en ce qu'**elle comporte en outre un capteur d'humidité agencé pour mesurer une valeur de taux d'humidité de la matrice argileuse crue pesée, ledit capteur d'humidité étant positionné au niveau du transporteur d'argile crue ou au niveau du second moyen de pesage.

10. Centrale à béton d'argile crue selon l'une quelconque des revendications 1 à 8, **caractérisé en ce qu'**elle comporte en outre un capteur d'humidité configuré pour mesurer une valeur de taux d'humidité de la matrice argileuse crue et un capteur d'humidité configuré pour mesurer une valeur de taux d'humidité de granulat.

11. Centrale à béton d'argile crue selon l'une quelconque des revendications 1 à 8, **caractérisé en ce qu'**elle comporte en outre un spectromètre configuré pour mesurer une valeur de paramètre physicochimique de la matrice argileuse crue, et au moins un autre spectromètre choisi parmi un spectromètre configuré pour mesurer une valeur de paramètre physicochimique de la composition d'activation, un spectromètre configuré pour mesurer une valeur de paramètre physicochimique de la composition d'oxydes métalliques calcinée et/ou un spectromètre configuré pour mesurer une valeur de paramètre physicochimique de granulat.

12. Centrale à béton d'argile crue selon l'une quelconque des revendications 1 à 8, **caractérisé en ce qu'**elle comporte en outre un capteur d'humidité (112) configuré pour mesurer une valeur de taux d'humidité de la matrice argileuse crue (2), et au moins un autre capteur d'humidité choisi parmi un capteur d'humidité (122) configuré pour mesurer une valeur de taux d'humidité de la composition d'activation, un capteur d'humidité (132) configuré pour mesurer une valeur de taux d'humidité de la composition d'oxydes métalliques calcinée et/ou un capteur d'humidité (712) configuré pour mesurer une valeur de taux d'humidité de granulat.

13. Centrale à béton d'argile crue selon l'une quelconque des revendications 1 à 10, **caractérisé en ce qu'**elle comporte un moyen de mesure (502) d'une valeur de couple de malaxage du malaxeur (50), le ou les processeurs (60) étant en outre configurés pour commander le transport d'un ou de plusieurs adjuvants au malaxeur (50) en fonction de la valeur de couple de malaxage mesurée.

14. Centrale à béton d'argile crue selon l'une quelconque des revendications 1 à 11, **caractérisé en ce que** le ou les processeurs (60) sont configurés pour recevoir une valeur de quantité de granulats présents dans la matrice argileuse crue (2) et **en ce que** le ou les processeurs (60) sont en outre configurés pour commander le transport d'un ou de plusieurs granulats au malaxeur (50) notamment en fonction de la valeur de quantité de granulats présents dans la matrice argileuse crue.

15. Procédé (900) de contrôle d'une centrale à béton d'argile selon l'une des revendications précédentes, ledit procédé comportant les étapes suivantes :
- Transport de granulats (910) depuis les trémies à granulats jusqu'au premier moyen de pesage (21), par un transporteur à granulats (711) ; et arrêt du transport commandé par l'un ou les processeurs (60) lorsqu'une valeur mesurée de poids de granulat atteint un seuil prédéterminé ; et transfert des granulats depuis un premier moyen de pesage (21) jusqu'au malaxeur (50) ;
- Transport d'une matrice argileuse crue (920) depuis le silo d'argile crue (11) jusqu'à un second moyen de pesage (22), par le transporteur d'argile crue (111) ; et arrêt du transport commandé par l'un ou les processeurs (60) lorsqu'une valeur mesurée de poids de matrice argileuse crue (2) atteint un seuil prédéterminé ; et transfert de la matrice argileuse crue depuis le second moyen de pesage (22) jusqu'au malaxeur (50) ;
- Transport d'une composition d'activation (930) depuis le silo d'activateur (12) jusqu'au second moyen de pesage (22), par le transporteur d'activateur (121) ; et arrêt du transport commandé par l'un ou les processeurs (60) lorsqu'une valeur mesurée de poids de composition d'activation atteint un seuil prédéterminé ; et transfert de la composition d'activation depuis le second moyen de pesage (22) jusqu'au malaxeur (50) ;
- Transport d'une composition d'oxydes métalliques calcinée (940) depuis le silo d'oxydes métalliques (13) jusqu'au second moyen de pesage (22), par un transporteur d'activateur (131) ; et arrêt du transport commandé par l'un ou les processeurs (60) lorsqu'une valeur mesurée de poids de composition d'oxydes métalliques calcinée atteint un seuil prédéterminé ; et transfert de la composition d'oxydes métalliques calcinée depuis le second moyen de pesage (22) jusqu'au malaxeur (50) ;
- Transport d'une quantité prédéterminée d'un ou plusieurs adjuvants (950) depuis un des réservoirs jusqu'au malaxeur (50), par un moyen de dosage volumétrique (23) ; et
- Malaxage (960) du mélange contenu dans le malaxeur (50) et ajout d'eau de façon à produire une gâchée de béton d'argile crue (3).
